(19) Europäisches Patentamt / European Patent Office / Office européen des brevets

(11) **EP 3 895 033 B1**

(12) **EUROPEAN PATENT SPECIFICATION**

(45) Date of publication and mention of the grant of the patent:
**15.03.2023 Bulletin 2023/11**

(21) Application number: **20707869.2**

(22) Date of filing: **15.01.2020**

(51) International Patent Classification (IPC):
**G06F 16/11** *(2019.01)*

(52) Cooperative Patent Classification (CPC):
**G06F 16/119**

(86) International application number:
**PCT/US2020/013746**

(87) International publication number:
**WO 2020/150393 (23.07.2020 Gazette 2020/30)**

(54) **EFFICIENT DATABASE MIGRATION USING AN INTERMEDIARY SECONDARY STORAGE SYSTEM**

EFFIZIENTE DATENBANKÜBERTRAGUNG UNTER ZUHILFENAHME EINES ZWEITEN SPEICHER-SYSTEMS

MIGRATION EFFICACE D'UNE BANQUE DE DONNÉES UTILISANT UN SYSTÈME SÉCONDAIRE DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.01.2019 US 201916250828**

(43) Date of publication of application:
**20.10.2021 Bulletin 2021/42**

(73) Proprietor: **Cohesity, Inc.**
**San Jose, CA 95110 (US)**

(72) Inventors:
• **CHAKANKAR, Abhijit**
**San Jose, CA 95110 (US)**
• **SINGHAL, Manoj**
**San Jose, CA 95110 (US)**
• **SHEN, Warren**
**San Jose, CA 95110 (US)**
• **MADDURI, Sashikanth**
**San Jose, CA 95110 (US)**

(74) Representative: **EIP**
**Fairfax House**
**15 Fulwood Place**
**London WC1V 6HU (GB)**

(56) References cited:
**US-A1- 2018 225 177**

## Description

## BACKGROUND OF THE INVENTION

A database may be associated with one or more files. The database may be associated with a primary database file, which contains the schema and data, and a log file, which contains logging information for all transactions completed by the server on which the database is running.

Developments to hardware and / or software that support such databases may trigger a need to migrate the one or more files from a current database to a different database, The one or more files associated with the database may occupy a large amount of storage (e.g., 10 TB), and it may take a long period of time (e.g., 10 hours) to migrate the data associated with the one or more files. The current database may be controlled so as to prevent write operations by the database for a period of so-called downtime to prevent the one or more files associated with the database from being inconsistent with the files that are migrated to the different database. Such an amount of downtime associated with the database may be unacceptable and/or impractical given the various function calls made to data in the database.

US2018225177 A1 discloses a method and system for migrating data and metadata from a first backup system to a second backup system via a content staging system.

## SUMMARY OF THE INVENTION

Embodiments disclosed herein are concerned with techniques to control the amount of downtime associated with backing up and migrating at least a portion of content of a database.

The object of the invention is solved by the features of the independent claims. Further embodiments are the subject-matter of the dependent claims.

According to a first aspect of the present disclosure there is provided a method comprising: performing a backup process, the backup process comprises receiving, from a first server, at least a portion of content of a database hosted on the first server; storing the received database content in a secondary storage system that tracks changes between different backup versions of the database content; receiving a request to migrate content of the database hosted on the first server to a second server; and performing a migration process, the migration process comprising providing to the second server, using the secondary storage system, one or more said backup versions of the database content, wherein, for database content hosted on the first server for which the migration process is not complete, the secondary storage system determines changes since a previous migration process, and uses the determined changes in determining whether to send a command, the command causing write operations by the database to be prevented.

The command may be a notification that causes a software application associated with the secondary storage system to notify an operator of an estimated amount of time to perform the migration process for the database content hosted on the first server for which the migration process is not complete. Alternatively, the command may be a notification that causes a software application associated with the first server to notify an operator of the estimated amount of time to perform the migration process for the database content hosted on the first server for which the migration process is not complete. The software application may provide to the operator an option to send an instruction, which causes write operations by the database to be prevented. For example, the database may transition into a read-only state and migrate the remaining portion from the secondary storage system to the target server hosting the target database. In some arrangements the first server may be isolated from external inputs.

Alternatively, the command may be an instruction that causes the first server to automatically cause write operations by the database to be prevented, for example by transitioning the database into a read-only state or isolating the first server from external inputs.

The backup process may further comprise configuring the secondary storage system to determine changes to the content of the database hosted on the first server since a previous backup process.

The received database content may be stored as chunks in the secondary storage system and the migration process may further comprise, for each backup version that has not been provided to the second server, identifying one or more groups of chunks, each group comprising at least one chunk that has changed since a previous migration process; and providing to the second server the one or more identified groups of chunks.

An amount of time required to perform the migration process may be estimated, wherein, in the event that the estimated amount of time to perform the migration process is not less than a downtime threshold, the migration process is performed for backup versions that have been generated since a previous migration process, and a database hosted on the first server is accessible by one or more users associated with the database during the migration process and wherein in the event the estimated amount of time is less than the downtime threshold, the migration process is performed for backup versions that have been generated since a previous migration process and the database hosted on the first server is prevented from processing write operations.

According to a second aspect of the present disclosure, there is provided a system for data migration. The system may comprise one or more processors and a memory configured to provide the one or more processors with instructions, the processors being operable, when configured with the instructions, to cause the system to perform the method of any of the embodiments disclosed herein.

According to a third aspect of the present disclosure, there is provided a computer program product embodied in a non-transitory computer readable storage medium and comprising computer instructions, which, when executed by a processing system, cause the processing system to perform the method of any of the embodiments disclosed herein.

## BRIEF DESCRIPTION OF THE DRAWINGS

Various embodiments of the invention are disclosed in the following detailed description and the accompanying drawings.

FIG. 1A is a block diagram illustrating an embodiment of a system for migrating database content.

FIG. 1B is a block diagram illustrating an embodiment of a system for migrating database content.

FIG. 1C is a block diagram illustrating an embodiment of a system for migrating database content.

FIG. 1D is a block diagram representing data residing in a storage volume.

FIG. 1E is a block diagram representing data residing in a storage volume.

FIG. 2A is a block diagram illustrating an embodiment of a tree data structure.

FIG. 2B is a block diagram illustrating an embodiment of a cloned snapshot tree.

FIG. 2C is a block diagram illustrating an embodiment of modifying a snapshot tree.

FIG. 2D is a block diagram illustrating an embodiment of a modified snapshot tree.

FIG. 3A is a block diagram illustrating an embodiment of a tree data structure.

FIG. 3B is a block diagram illustrating an embodiment of a cloned file metadata tree.

FIG. 3C is a block diagram illustrating an embodiment of modifying a file metadata tree of a tree data structure.

FIG. 3D is a block diagram illustrating an embodiment of a modified file metadata tree.

FIG. 4A is a diagram illustrating an embodiment of a view of file system data.

FIG. 4B is a diagram illustrating an embodiment of a view of file system data.

FIG. 5 is a flow chart illustrating a process for determining changes associated with a database file in accordance with some embodiments.

FIG. 6A is a flow chart illustrating a process for migrating database content in accordance with some embodiments.

FIG. 6B is a flow chart illustrating a process for migrating database content in accordance with some embodiments.

FIG. 7 is a flow chart illustrating a process for completing a migration of database content accordance with some embodiments.

## DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

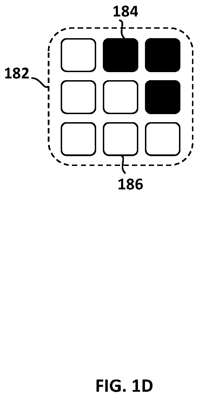

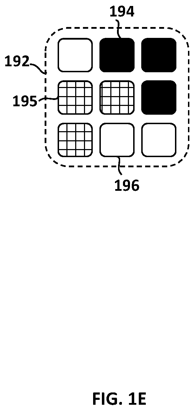

A primary system, or source, includes a source database and stores data associated with the database in one or more database files. The one or more database files may include a primary database file and a log file. A secondary storage system causes the primary system to perform a backup process so as to generate a backup snapshot, according to a backup policy, and store, as a particular backup version, the backup snapshot to the secondary storage system. A backup snapshot represents the state of the primary system at a particular point in time (e.g., the state of the file system data). The backup snapshot may include data of the one or more database files. The backup snapshot may be a full backup snapshot or an incremental backup snapshot. A full backup snapshot, described in more detail below with reference to FIG. 1D, stores the entire state of the primary system at the particular point in time and includes all of the data associated with the one or more database files. An incremental backup snapshot, described in more detail below with reference to FIG. 1E, includes the data associated with the primary system that were not backed up in a previous backup snapshot and may include the data associated with the one or more database files that was not backed up in a previous backup snapshot.

A secondary storage system ingests and stores the file system data of the backup snapshot. A file system manager of the secondary storage system preferably organizes the file system data of the backup snapshot using a tree data structure. An example of the tree data structure is a snapshot tree (e.g., Cohesity Snaptree), which may be based on a B+ tree structure (or other type of tree structure in other embodiments). The tree data structure provides a view of the file system data corresponding to a backup snapshot. The view of the file system data corresponding to the backup snapshot is comprised of a file system metadata snapshot tree and one or more file metadata trees. A file metadata tree is a snapshot structure that stores the metadata associated with a file and may correspond to one of the files included in the backup snapshot. For example, a file metadata tree may correspond to one of the database files (e.g., primary database file, log file, etc.) and may be referred to hereinafter as a backup version.

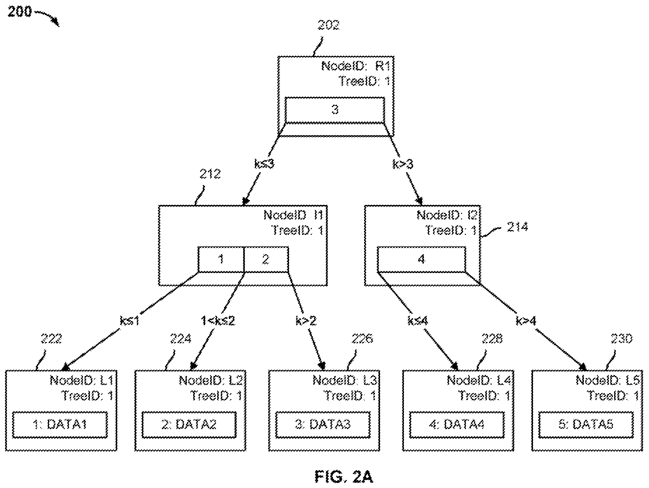

A file system metadata snapshot tree is a representation of a fully hydrated backup because it provides a complete view of the primary system at a particular moment in time. A fully hydrated backup is a backup that is ready for use without having to reconstruct a plurality of backups to use it. Conventional systems may reconstruct a backup by starting with a full backup and applying one or more changes associated with one or more incremental backups to the data associated with the full backup. In contrast, any file stored on the primary system at a particular time and the file's contents, for which there is an associated backup snapshot, may be determined from the file system metadata snapshot tree, regardless of whether the associated backup snapshot was a full backup snapshot or an incremental backup snapshot. Creating an incremental backup snapshot of a primary system may include only copying data of the primary system that was not previously backed up. However, a file system metadata snapshot tree corresponding to an incremental backup snapshot provides a complete view of the primary system at the particular moment in time because it includes references to data of the primary system that was previously stored. For example, a root node associated with the file system metadata snapshot tree may include one or more references to nodes associated with one or more previous backup snapshots and one or more references to nodes associated with the current backup snapshot. This provides significant savings in the amount of time needed to restore, recover, or replicate a database file. In contrast, traditional recovery/restoration methods may require significant time, storage, and computational resources to reconstruct a particular version of a database file from a full backup and a series of incremental backups. Further details of the file system snapshot tree are provided below with reference to FIGs. 2A to 3D.

Embodiments disclosed herein are concerned with migration of data stored in a database hosted on the primary system (source) to a target database hosted on a target server. In one embodiment, the target database hosted on the target server is an upgraded database. In another embodiment, the target server hosting the target database is an upgraded server. In yet another embodiment, the target database is an upgraded database and the target server hosting the target database is an upgraded server. In a further embodiment, the target database is a different, and not necessarily upgraded, database, and the data has been migrated to this different database for reasons such as security.

The one or more database files to be migrated may be quite large (e.g., 10 TB), such that it would take a long period of time (e.g., 10 hours) for the data associated with the one or more database files to be migrated to the target server hosting the target database. One conventional solution is to shut down the database running on the primary system and migrate the data associated with the one or more database files. The source database may be shut down to ensure that the one or more database files associated with the target database are consistent with the one or more database files associated with the source database. The source database may receive tens, hundreds, even thousands of database requests (e.g., reads/writes) per second from a plurality of users. The number of unfulfilled database requests increases each second that the database is offline. Such a conventional solution may result in an unacceptable amount of downtime for the database.

Embodiments disclosed herein teach a method for transferring data from a first server such as may comprise the above-mentioned source database to a second server such as may comprise the above-mentioned target database. Broadly speaking, the method involves use of a backup process, from the source database, and use of a migration process for providing such backed up data to the target database. The backup process involves receiving, from a first server, at least a portion of content of a database hosted on the first server. The received database content is stored in a secondary storage system that tracks changes between different backup versions of the database content. A request is received to migrate content of the database hosted on the first server to a second server. A migration process is then performed, comprising providing to the second server, using the secondary storage system, one or more said backup versions of the database content. For database content hosted on the first server for which the migration process is not complete, the secondary storage system determines changes since a previous migration process and uses the determined changes in determining whether to send a command, the command causing write operations by the database to be prevented.

Users associated with the source database hosted on a primary system may continue to use the source database while data is being migrated in the background from the secondary storage system to the second server hosting the target database. The secondary storage system is used to migrate the database content instead of the primary system to free up system resources of the primary system for other purposes, such as to respond to one or more database requests.

After the migration process for the one or more backup versions is complete, the database files that are stored on the primary system may be inconsistent with the database files that are stored on the target server hosting the target database, because users may have continued to make changes to the database files held in the primary system, as noted above. The secondary storage system may be configured to generate an estimated amount of time to migrate these changes to the second server hosting the target database, and send a command. In some embodiments, the command may be a notification that causes a software application associated with the secondary storage system to notify an operator of the estimated amount of time. Alternatively, the command may be a notification that causes a software application associated with the first server to notify an operator of the estimated amount of time. The software application may then provide to the operator an option to send an instruction, the instruction causing write operations by the database to be prevented. For example, the database may transition into a read-only state and migrate the remaining portion from the secondary storage system to the target server hosting the target database.

The operator may decline to send the instruction because the amount of downtime associated with the database running on the primary system is too long. For example, it may take an hour to migrate the changes. In the event the operator declines to send the instruction, the secondary storage system performs the backup process for the changed data, thereby generating one or more further backup versions, and the migration process is performed for these further backup versions. The primary system may also perform one or more incremental backup snapshots while the migration process is being performed for these further backup versions, thereby storing yet further backup versions in the secondary storage system.

In the event the operator agrees to send the instruction and migrate the remaining portion of the one or more database files (e.g., the amount of downtime is not too long), the source database may be transitioned into a state in which write operations are prevented, for example the source database may be transitioned into a read-only mode. Alternatively, the primary system may be isolated from external inputs. In either case the secondary storage system migrates the remaining portion of the one or more database files to the target server hosting the target database.

In other embodiments, the database is automatically transitioned into a state in which write operations by the database are prevented and the changes are migrated from the secondary storage system to the target server hosting the target database in the event the amount of downtime associated with the data migration is less than a downtime threshold (e.g., 1 minute). The downtime threshold may be specified by an operator associated with the source database.

The cycle of migrating remaining portions of one or more database files, which is to say migrating those changes that are made by users while the migration process is performed for already created and to-be-migrated backup versions, to the target server hosting the target database, and determining whether to send a command in order to prevent write operations by the source database, continues until the amount of downtime is an acceptable amount of downtime. After the migration process has been completed for all of the data in the source database the one or more users associated with the source database may be reassigned to become users associated with the target database.

Each time a given remaining portion is migrated, and the one or more users continue to use the source database, the amount of downtime associated with the next migration process may decrease. For example, it may take 10 hours to perform an initial instance of the migration process that includes the initial portion of the one or more database files, an hour to perform a second instance of the migration process that includes a first remaining portion of the one or more database files, thirty minutes to perform a third instance of the migration process that includes a second remaining portion of the one or more database files, ..., and less than a minute to perform an nth instance of the migration process that includes an (n-1)th remaining portion of the one or more database files. The technique to control the amount of downtime not only controls the amount of downtime associated with a source database, but also ensures that the one or more database files stored on the primary system and the one or more database files stored on the target server hosting the target database are in sync with each other before additional changes are made to the one or more databases files. In one particular use case, the amount of downtime associated with the migration is reduced, compared to conventional migration techniques.

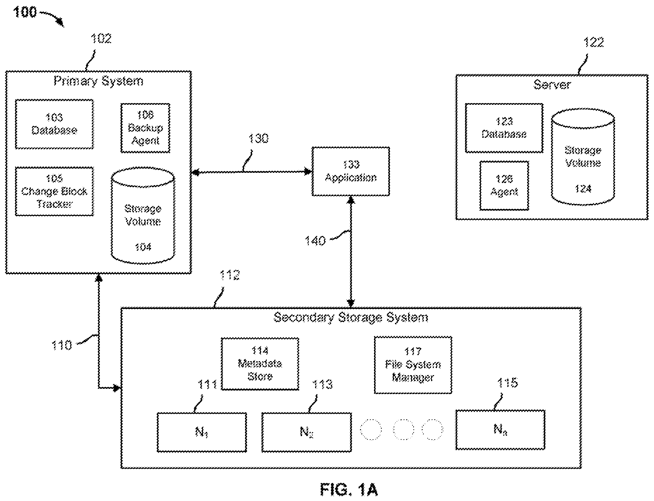

FIG. 1A is a block diagram illustrating an embodiment of a system for migrating database content. In the example shown, system 100 includes primary system 102, secondary storage system 112, server 122, and application 133.

Primary system 102 is a computing system comprised of one or more servers, one or more computing devices, one or more storage devices, and/or a combination thereof. Primary system 102 is comprised of database 103, storage volume 104, change block tracker 105, and backup agent 106. Primary system 102 may be a database server.

Database 103 may be a computer program that is configured to enter and retrieve information from a computerized database. Examples of database 103 include, but are not limited to, SQL Server, Oracle Database, Sybase, Informix, MySQL, etc. Database 103 may correspond to a first version of the database. Database 103 may be associated with one or more database files. One of the database files may be a primary database file. A primary database file is a file that contains the schema and data associated with a database. One of the database files may be a log file. A log file is a file that stores information for all database transactions completed by primary system 102. As explained above, database 103 may be instructed to transition into a state in which write operations by the database 103 are prevented. The instruction may be received from an operator, in response to receipt of a command as described above. Alternatively, the command may be sent directly by the secondary storage system 112 to the primary system 102. In other embodiments, such a command may be received from backup agent 106. In other embodiments, the command may be received from software application 133. In other embodiments, the command may be received from a user interface (not shown) associated with primary system 102.

The one or more database files are stored in storage volume 104. Storage volume 104 may be configured to store the file system data associated with primary system 102. The file system data may include the one or more database files, one or more non-database files, and metadata associated with storage volume 104. The content of the database stored in storage volume 104 of the primary system comprises blocks. Blocks are typically of the same size.

Change block tracker 105 is configured to maintain a map of the one or more changes to the file system data associated with primary system 102. For example, change block tracker 105 may maintain a map of the one or more changes to the one or more database files. As mentioned above, primary system 102 may be configured to perform a full backup snapshot or an incremental backup snapshot. As also mentioned above, a full backup snapshot includes all of the file system data stored in storage volume 104, while an incremental backup snapshot includes all of the file system data that was not previously backed up. Change block tracker 105 may be used to identify the file system data and data associated with the one or more database files that was not previously backed up. The map associated with change block tracker 105 may be cleared after a backup snapshot is performed.

Change block tracker 105 is a data structure that identifies which blocks in storage volume 104 have changed as a result of operations performed by, for example, application 133. Change block tracker 105 may be implemented as a bitmap in some embodiments. The bitmap indicates whether a given block has changed or not relative to the previous backup snapshot that was taken. For example, a bitmap may be 100 bits long and all bits begin as a 0. If a block has changed since the last backup snapshot was taken, Change block tracker 105 causes the bit representing that block to change from a 0 to a 1.

Backup agent 106 may cause primary system 102 to perform a backup snapshot and to send to secondary storage system 112 file system data stored in storage volume 104. Backup agent 106 may receive from secondary storage system 112 a command to perform a backup snapshot, which causes the secondary storage system 112 to receive a list of blocks from the primary system (first server).

The list of blocks received by the secondary storage system may comprise a list of all blocks in the database hosted on the primary system (first server). As will be described below with reference to an example shown in Figure 1D, in this case the portion of content of the database hosted on the first server received in the backup process initiated by backup agent 106 comprises all blocks in the database. This corresponds to a full backup which may, for example, be an initial backup.

In other embodiments, the list of blocks received by the secondary storage system comprises a list of blocks that have changed since a previous backup process. As will be described below with reference to an example shown in Figure 1E, in this case the portion of content of the database hosted on the first server received in the backup process initiated by backup agent 106 comprises blocks that have changed since a previous backup process.

The list of blocks received by the secondary storage system 112 may take the form of a list of one or more groups of blocks and may be grouped together on the primary system 102 into a group of blocks, or changed area, by a Coalesce Process. The Coalesce Process groups together non-contiguous blocks that have changed since a last backup snapshot was taken. The aim of the Coalesce Process is to reduce the number of changed areas whilst keeping the size of the change areas manageable in an effort to reduce the time to write the changed areas to the secondary storage system 112.

The Coalesce Process can be explained with reference to an example, in which 10 bytes have changed within an exemplary range of 32kB. These 10 bytes that have changed are distributed across the 32 kB range, such that, if ten separate writes are performed on a system, then in terms of system resources required to perform write operations, this is much less efficient than performing only one write. However, if a large amount of data is to be written, a single write process could be more resource intensive than the ten individual write processes. In essence this is a constraint optimization problem and the Coalesce Process may be configured with decision making based upon criteria such as type of storage, operating system characteristics, current workload, number of changed areas and the distribution of the changed areas. It will be appreciated that the Coalesce Process may be used more often for hard disk drives rather than solid state drives which are better optimized for highly distributed changed areas.

In some embodiments, the backup agent 106 may receive from secondary storage system 112 a command to estimate the amount of time required to perform the backup process. This estimation may comprise evaluating an algorithm that is dependent upon one or more of: number of bytes in the portion of content in the backup snapshot; distribution of those bytes stored on the first server; and number of threads of the first server available for the backup process.

Primary system 102 is coupled to secondary storage system 112 via network connection 110. Connection 110 may be a wired connection or a wireless connection.

Secondary storage system 112 is a storage system configured to ingest and store file system data received from primary system 102 via connection 110. Secondary storage system 112 may be comprised of one or more storage nodes 111, 113, 115. Each storage node may have its own corresponding processor. The one or more storage nodes may be one or more solid state drives, one or more hard disk drives, or a combination thereof. The file system data included in a backup snapshot is stored in one or more of the storage nodes 111, 113, 115. In one embodiment, secondary storage system 112 is comprised of one solid state drive and three hard disk drives.

Secondary storage system 112 includes file system manager 117. File system manager 117 is configured to organize in a tree data structure the file system data received in a backup snapshot from primary system 102. An example of the tree data structure is a snapshot tree (e.g., Cohesity Snaptree), which may be based on a B+ tree structure (or other type of tree structure in other embodiments). The tree data structure provides a view of the file system data corresponding to a backup snapshot. The view of the file system data corresponding to the backup snapshot are comprised of a snapshot tree and a plurality of file metadata trees, and in essence this view represents a backup version in the secondary storage system 112. A file metadata tree may correspond to one of the files included in the backup snapshot. The file metadata tree is a snapshot structure that stores the metadata associated with the file. For example, a file metadata tree may correspond to a database file. File system manager 117 is configured to perform one or more modifications, as disclosed herein, to a snapshot tree and a file metadata tree. The snapshot tree and file metadata trees are stored in metadata store 114. The metadata store 114 may store the view of file system data corresponding to a backup snapshot. The metadata store may also store data associated with content files that are smaller than a limit size.

The tree data structure is used to capture different versions of backup snapshots. The tree data structure allows a chain of snapshot trees corresponding to different versions of backup snapshots (i.e., different snapshot tree versions) to be linked together by allowing a node of a later version of a snapshot tree to reference a node of a previous version of a snapshot tree (e.g., a "snapshot tree forest"). For example, a root node or an intermediate node of a second snapshot tree corresponding to a second backup snapshot may reference an intermediate node or leaf node of a first snapshot tree corresponding to a first backup snapshot.

A snapshot tree includes a root node, one or more levels of one or more intermediate nodes associated with the root node, and one or more leaf nodes associated with an intermediate node of the lowest intermediate level. The root node of a snapshot tree includes one or more pointers to one or more intermediate nodes. Each intermediate node includes one or more pointers to other nodes (e.g., a lower intermediate node or a leaf node). A leaf node may store file system metadata, data associated with a file that is less than a limit size, an identifier of a data brick, a pointer to a file metadata tree (e.g., Blob structure), or a pointer to a data chunk stored on the secondary storage system.

Data associated with a file that is smaller than or equal to a limit size (e.g., 256 kB) may be stored in a leaf node of the snapshot tree. A leaf node may be an index node (inode). A file metadata tree may be generated for a file that is larger than the limit size. The file metadata tree has a snapshot structure and is configured to store the metadata associated with a version of a file. The file may correspond to a database file.

The file metadata tree includes a root node, one or more levels of one or more intermediate nodes associated with the root node, and one or more leaf nodes associated with an intermediate node of the lowest intermediate level. The tree data structure associated with a file metadata tree allows a chain of file metadata trees corresponding to different versions of a file to be linked together by allowing a node of a later version of a file metadata tree to reference a node of a previous version of a file metadata tree. For example, a root node or an intermediate node of a second file metadata tree corresponding to a second version of a database file may reference an intermediate node or leaf node of a first file metadata tree corresponding to a first version of the database file.

Database content received from the primary system 102 by the secondary storage system 112 is stored in chunks. A leaf node of a file metadata tree includes an identifier of a data brick associated with one or more data chunks of the file or a pointer to the data brick associated with one or more data chunks of the file. For example, a file metadata tree corresponds to a database file and a leaf node of the file metadata tree may include a pointer to or an identifier of a data brick associated with one or more data chunks of the database file. A data brick may include one or more data chunks. In some embodiments, the size of a brick is 256 kB. The data brick may include one or more data chunks. The one or more data chunks may be of variable length within a particular range (e.g., 4kB to 64 kB).

The location of a data brick is identified using a data structure (e.g., list, table, etc.) stored in metadata store 114 that matches brick identifiers to a physical storage location or the location of the data brick may be identified based on the pointer to the data brick. In some embodiments, the data structure associates brick identifiers with chunk identifiers (e.g., hashes). The data structure or a different data structure may associate chunk identifiers with a brick offset. A chunk may be associated with a chunk table, which contains a corresponding chunk file ID. The chunk file ID is associated with a chunk file table, which indicates the location of the data (e.g., an offset in a data brick).

A chunk identifier (e.g., hash) may be computed for a data chunk. The chunk identifier is compared to entries included in a data structure that stores chunk identifiers associated with data chunks stored by the secondary storage system. In the event the computed chunk identifier matches an entry of the data structure (e.g., hash dictionary), a reference to the previously stored chunk having the computed chunk identifier may be stored in the brick.

During the migration process, a Coalesce Process may be run in respect of chunks stored on the secondary storage system 112. The Coalesce Process groups together non-contiguous chunks that have changed between backup versions into a group of chunks that forms a changed area. This changed area may then be migrated to the target database hosted on the target server to advantageously reduce the time taken to complete a migration process.

Changed areas formed from the group of chunks will take less time to write to the target database than the writing of individual changed chunks. For this reason, a Coalesce Process may be used as part of the migration process. It will be appreciated that when the migration process is performed for the first time, which is to say when a first backup version is provided to the second server 122, all of the chunks making up this first backup version can be considered to have changed. In this case, running the Coalesce Process is unlikely to provide a benefit, so is unlikely to be used for that first backup version.

Server 122 is a computing system comprised of one or more servers, one or more computing devices, one or more storage devices, and/or a combination thereof. Server 122 may be comprised of database 123 and storage volume 126.

Database 123 may be a target database. Examples of database 123 include, but are not limited to, SQL Server, Oracle Database, Sybase, Informix, MySQL, etc. Database 103 may correspond to a first version of the database. Database 123 may be associated with one or more database files. One of the database files may be a primary database file. Another one of the database files may be a log file. The one or more database files are stored in storage volume 124. Storage volume 124 is configured to store the file system data associated with server 122. The file system data may include the one or more database files, one or more non-database files, and/or metadata associated with storage volume 124. Server 122 includes agent 126. Agent 126 is configured to organize the data associated with the one or more migrated database files in a manner that is accessible by database 123.

Application 133 is coupled to primary system 102 and secondary storage system 112 via network connection 130 and network connection 140, respectively. Application 133 may be running on a client device (not shown). In other embodiments, application 133 is hosted on a cloud server running in a cloud environment (e.g., Amazon Web Services, Microsoft Azure, Google Cloud, etc.). An operator associated with database 103 may access application 133 via a network connection (not shown).

Application 133 may be configured to provide an operator associated with source database 103, via a user interface of the client device, an estimated amount of time needed to perform the migration process from secondary storage system 112 to target server 122 for one or more database files. The estimated amount of time may be determined by means of an algorithm that is dependent upon one or more of: number of backup versions that have been generated since a previous migration process, number of identified groups of chunks to be migrated, number of bytes in the one or more identified groups of chunks and time to write the bytes to the second server. Further examples will be described in more detail below. The estimated amount of time may also be dependent on a current workload associated with secondary storage system 112.

Application 133 may be configured to receive from an operator associated with database 103 a command to transition the source database 103 into a state in which write operations by the source database 103 are prevented. In response to receiving the command, application 133 provides to primary system 102 the command to transition the source database 103. For example, primary system 102 may transition the database 103 into a read-only state in response to the command, or the primary system 102 may be isolated from external inputs.

Application 133 may be configured to provide to secondary storage system 112 via network connection 140 a command to migrate one or more database files to target server 122. In response to receiving the command, secondary storage system 122 migrates the one or more database files to target server 122.

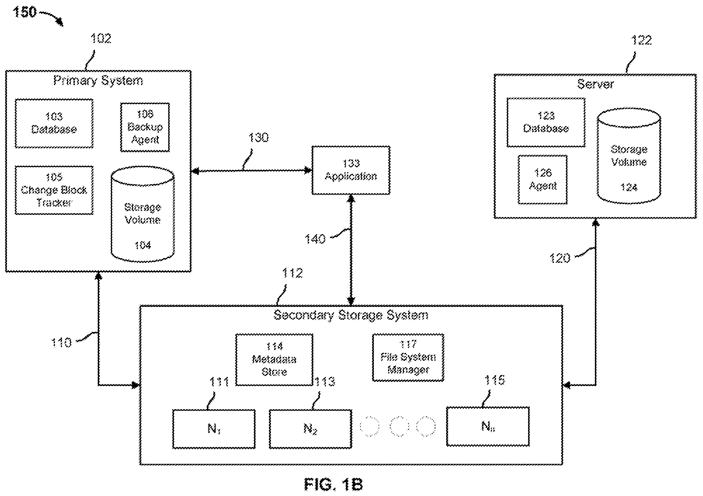

FIG. 1B is a block diagram illustrating an embodiment of a system for migrating database content. In the example shown, system 150 includes primary system 102, secondary storage system 112, server 122, and application 133.

In the example shown, an operator associated with database 103 has provided to application 133 a command to migrate from secondary storage system 112 to target server 122 the one or more database files associated with database 103. The command may include a selection of a particular version of the one or more database files. Secondary storage system 112 migrates the database content instead of primary system 102 to free up system resources of primary system 102 for other purposes, such as to respond to one or more database requests.

The particular version of the one or more database files may be associated with a particular view, and thus backup version, of the file system data corresponding to a backup snapshot received from primary system 102. File system manager 117 may determine the particular view and traverses the tree data structure corresponding to the particular view to locate the data associated with the particular version of the one or more database files. Secondary storage system 112 performs the migration process so as to provide to target server 122 the particular backup versions of the one or more database files.

Primary system 102 performs the backup process by providing database content in the form of one or more backup snapshots of file system data to secondary storage system 112. The one or more backup snapshots may be incremental or full backup snapshots as described above and are stored by the secondary storage system 112 as backup versions.

The backup snapshots of file system data provided to the secondary storage system 112 as part of the backup process may relate to data associated with the one or more databases files that are being migrated. For example, users being served content from source database 103 may make modifications to the database files stored in storage volume 106 while the migration process is being performed in respect of data that was provided to the secondary storage system 112 during a previous backup process, and is being migrated from secondary storage system 112 to server 122. Accordingly, after the migration process for the one or more backup versions is complete, the database files that are stored in storage volume 104 may be inconsistent with the database files that are stored in storage volume 124.

In addition, and while the migration process is ongoing, the secondary storage system may receive one or more further portions of content as full or incremental backup snapshots (using the techniques described above), as part of a further instance of the backup process, and store them as backup version(s). Accordingly, the secondary storage system 112 is able to determine an amount of time needed to migrate the / these further backup version(s) from secondary storage system 112 to server 122. These further, or remaining, portion of content making up the backup version(s) corresponds to the data needed to make the one or more database files that are stored on primary system 102 consistent with the one or more database files that are stored on target server 122.

As just described, secondary storage system 112 is configured to ingest and store file system data included in the one or more subsequent backup snapshots received from primary system 102 as a particular backup version. File system manager 117 is configured to update a tree data structure based on the file system data included in a backup snapshot received from primary system 102. Updating the tree data structure may include cloning a view associated with the last backup snapshot and performing one or more modifications to the cloned view based on the file system data included in the backup snapshot. Updating the tree data structure may depend on the received list of (group of) blocks. The cloned view may include references to data associated with one or more previous backup snapshots and references to data associated with a current backup snapshot. Accordingly, a given backup version of the secondary storage system 112 can be identified by such references to data associated with previous and current backup snapshots.

Secondary storage system 112 may provide to application 133 a notification that includes the determined amount of time needed to migrate the remaining portion of content. In some embodiments, in response to receiving the notification, application 133 provides to an operator associated with database 103 via a user interface an indication of the determined amount of time needed to migrate the remaining portion of content. The user interface may also provide the operator associated with database 103, with the option to transition the database 103 into a state in which write operations by the database 103 are prevented and migrate the remaining portion of content from secondary storage system 112 to server 122 or the option to migrate in the background the remaining portion of content from secondary storage system 112 to server 122 while one or more users associated with database 103 may continue to use database 103.

The operator associated with database 103 may decline to transition the database 103 into a state in which write operations by the database 103 are prevented because the amount of downtime associated with database 103 is too long. For example, it may take an hour to migrate the remaining portion of content. In the event that the operator declines to transition database 103 and migrate the remaining portion of content, secondary storage system 112 may be configured to migrate the remaining portion of content and the one or more users associated with database 103 may continue to use database 103 while the remaining portion of content is migrated in the background from secondary storage system 112 to server 122.

In the scenario in which the database 103 is transitioned and the one or more database files stored in storage volume 104 include data that was not included in a backup snapshot received by the secondary storage system 112 from the primary system 102, a last backup process is performed, such that the secondary storage system 112 receives and stores a last incremental backup snapshot, for inclusion in a last instance of the migration process. Alternatively, the data that was not included in a backup snapshot may be provided from primary system 102 to server 122.

In other embodiments, database 103 is automatically transitioned into a state in which write operations by the database 103 are prevented and the remaining portion of content is migrated from secondary storage system 112 to server 122 in the event that the amount of downtime associated with the data migration is less than a downtime threshold (e.g., 1 minute). The downtime threshold may be specified by the operator associated with database 103. Application 133 may receive from secondary storage system 112 the notification that includes the determined amount of time needed to migrate the remaining portion of the one or more database files and in response to the notification, provide to primary system 102 a command to transition the database 103 into a state in which write operations are prevented. Examples of a state in which write operations are prevented include a read-only state of the database 103. Alternatively, the command may cause the primary system 102 to be isolated from further external inputs.

In the scenario in which the database 103 is not transitioned it will be appreciated that further changes are likely to have been made to the database files held in the storage volume 104 during and/or since migration of the backup versions comprising the remaining portion of content. In this situation, as explained above, the secondary storage system may receive one or more yet further portions of content as full or incremental backup snapshots (using the techniques described above), as part of a yet further instance of the backup process, and store them as yet further backup version(s). Also as described above, the secondary storage system 112 may estimate an amount of time to migrate the yet further backup version(s) and a determination made as to whether the amount of time associated with the migration time is less than the downtime threshold.

The cycle of migrating remaining portions of content, which is to say migrating those changes that are made by users while the migration process is performed for previous backup versions from secondary storage system 112 to target server 122 and determining whether to send a command that can be used to prevent write operations by the database 103 continues until the amount of downtime is an acceptable amount of downtime (e.g., less than the downtime threshold).

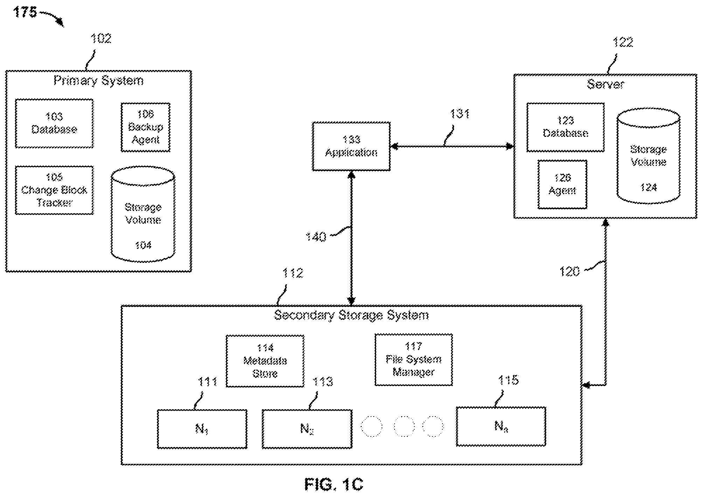

FIG. 1C is a block diagram illustrating an embodiment of a system for migrating database content. In the example shown, system 175 includes primary system 102, secondary storage system 112, server 122, and application 133.

In the example shown, the one or more database files stored in storage volume 104 are consistent with the one or more databases stored in storage volume 124. One or more users associated with database 103 have been reassigned to database 123. An operator associated with database 123 uses application 133 to manage database 123 via network connection 131.

Secondary storage system 112 causes server 102 to perform a backup snapshot according to a backup snapshot policy and store the backup snapshot to secondary storage system 112. A backup snapshot represents the state of server 102 at a particular point in time (e.g., the state of the file system data). The backup snapshot may include data of the one or more database files. The backup snapshot may be a full backup snapshot or an incremental backup snapshot.

FIG. 1D is a schematic diagram representing a portion of data held on server 122. The figure shows portion 182 of data containing used blocks 184 and unused blocks 186. A full backup snapshot, which encompasses the entire state of data held on the primary system at the particular point in time that it was taken, includes all used blocks 184 and all unused blocks 186.

FIG. 1E is a schematic diagram showing a different representation of a portion of data held on server 122. In the example shown, the portion 192 of data contains used blocks 194, changed blocks 195 and unused blocks 196. An incremental backup snapshot, which encompasses only the data associated with the primary system that was not backed up in a previous backup snapshot, includes only the changed blocks 195.

Secondary storage system 112 ingests and stores the file system data of the backup snapshot. As already mentioned above and will now be explained in more detail, file system manager 117 organizes the file system data of the backup snapshot, preferably using a tree data structure. In some embodiments, file system manager 117 is configured to update an existing tree data structure (e.g., the tree data structure corresponding to the one or more migrated database files) based on the file system data included in the backup snapshot. Secondary storage system 112 may be configured to provide to application 133 via network connection 140 information associated with secondary storage system 112.

FIG. 2A is a block diagram illustrating an embodiment of a tree data structure. A tree data structure is used to represent the file system data that is stored on a secondary storage system, such as secondary storage system 112. The file system data may include metadata for a distributed file system and may include information, such as chunk identifier, chunk offset, file size, directory structure, file permissions, physical storage locations of the files, etc. A file system manager, such as file system manager 117, generates tree data structure 200.

In the example shown, tree data structure 200 is comprised of a snapshot tree that includes a root node 202, intermediate nodes 212, 214, and leaf nodes 222, 224, 226, 228, and 230. Although tree data structure 200 includes one intermediate level between root node 202 and leaf nodes 222, 224, 226, 228, 230, any number of intermediate levels may be implemented. Tree data structure 200 may correspond to a backup snapshot of file system data at a particular point in time *t*, for example at time to. The backup snapshot may be received from a primary system, such as primary system 102. The snapshot tree in conjunction with a plurality of file metadata trees provides a complete view of the primary system associated with the backup snapshot for the particular point in time. The snapshot tree may correspond to a full backup snapshot. A full backup snapshot includes all of the file system data stored on a primary system.

A root node is the starting point of a snapshot tree and includes pointers to one or more other nodes. An intermediate node is a node to which another node points (e.g., root node, other intermediate node) and includes one or more pointers to one or more other nodes. A leaf node is a node at the bottom of a snapshot tree. Each node of the tree structure includes a view identifier of a view with which the node is associated (e.g., TreeID).

A leaf node is configured to store key-value pairs of file system data. A data key *k* is a lookup value by which a particular leaf node may be accessed. For example, "1" is a data key that may be used to lookup "DATA1" of leaf node 222. The data key *k* may correspond to a brick number of a data brick. A data brick may be comprised of one or more data chunks. In some embodiments, the leaf node is configured to store file system metadata (e.g., chunk identifier (e.g., hash value, SHA-1, etc.), file size, directory structure, file permissions, physical storage locations of the files, etc.). A leaf node may store a data key k and a pointer to a location that stores the value associated with the data key.

In other embodiments, a leaf node is configured to store the actual data associated with a file when the file is less than or equal to a limit size. For example, data associated with a file that is less than or equal to 256 kB may reside in the leaf node of a snapshot tree. In some embodiments, a leaf node includes a pointer to a file metadata tree (e.g., blob structure) when the size of the file is larger than the limit size. For example, a leaf node may include a pointer to a file metadata tree corresponding to a database file.

A root node or an intermediate node includes one or more node keys. The node key may be an integer value or a non-integer value. Each node key indicates a division between the branches of the node and indicates how to traverse the tree structure to find a leaf node, i.e.,

which pointer to follow. For example, root node 202 may include a node key of "3." A data key *k* of a key-value pair that is less than or equal to the node key is associated with a first branch of the node and a data key k of a key-value pair that is greater than the node key is associated with a second branch of the node. In the above example, to find a leaf node storing a value associated with a data key of "1," "2," or "3," the first branch of root node 202 would be traversed to intermediate node 212 because the data keys of "1," "2", and "3" are less than or equal to the node key "3." To find a leaf node storing a value associated with a data key of "4" or "5," the second branch of root node 202 would be traversed to intermediate node 214 because data keys "4" and "5" are greater than the node key of "3."

In some embodiments, a hash function may determine which branch of a node with which the non-numerical key is associated. For example, a hash function may determine that a first bucket is associated with a first branch of a node and a second bucket is associated with a second branch of the node.

A data key *k* of a key-value pair is not limited to a numerical value. In some embodiments, non-numerical data keys may be used for a data key-value pair (e.g., "name," "age", etc.) and a numerical key may be associated with the non-numerical data key. For example, a non-numerical data key of "name" may correspond to a numerical key of "3." Data keys that alphabetically come before the word "name" or is the word "name" may be found following a left branch associated with a node. Data keys that alphabetically come after the word "name" may be found by following a right branch associated with the node. In some embodiments, a hash function may be associated with the non-numerical data key. The hash function may determine which branch of a node with which the non-numerical data key is associated.

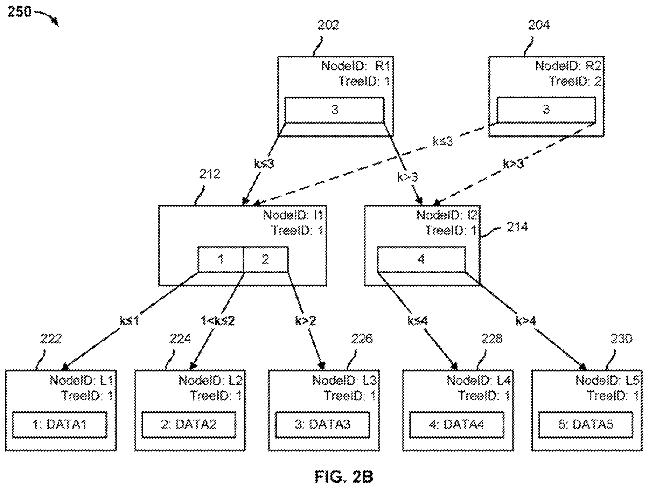

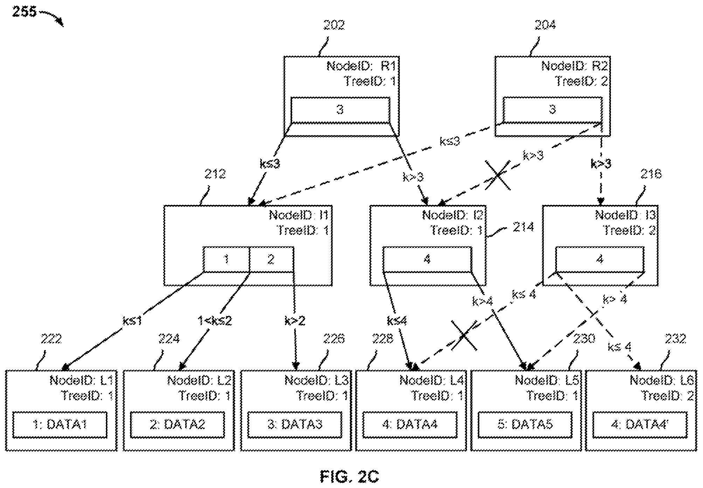

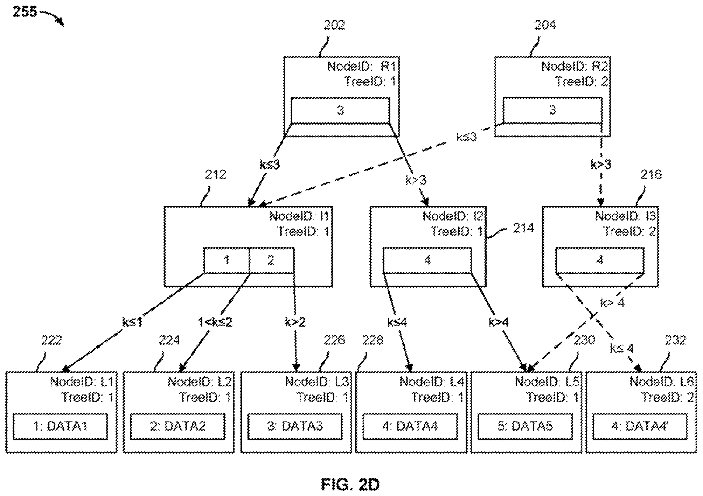

In the example shown, root node 202 includes a pointer to intermediate node 212 and a pointer to intermediate node 214. Root node 202 includes a NodeID of "R1" and a TreeID of "1." The NodeID identifies the name of the node. The TreeID identifies the view with which the node is associated. When a change is made to data stored in a leaf node as described with respect to FIGS. 2B, 2C, and 2D, the TreeID is used to determine whether a copy of a node is to be made.

Root node 202 includes a node key that divides a set of pointers into two different subsets. Leaf nodes (e.g., "1-3") with a data key *k* that is less than or equal to the node key are associated with a first branch and leaf nodes (e.g., "4-5") with a data key *k* that is greater than the node key are associated with a second branch. Leaf nodes with a data key of "1," "2," or "3" may be found by traversing tree data structure 200 from root node 202 to intermediate node 212 because the data keys have a value that is less than or equal to the node key. Leaf nodes with a data key of "4" or "5" may be found by traversing tree data structure 200 from root node 202 to intermediate node 214 because the data keys have a value that is greater than the node key.

Root node 202 includes a first set of pointers. The first set of pointers associated with a data key less than the node key (e.g., "1", "2," or "3") indicates that traversing tree data structure 200 from root node 202 to intermediate node 212 will lead to a leaf node with a data key of "1," "2," or "3." Intermediate node 214 includes a second set of pointers. The second set of pointers associated with a data key greater than the node key indicates that traversing tree data structure 200 from root node 202 to intermediate node 214 will lead to a leaf node with a data key of "4" or "5."

Intermediate node 212 includes a pointer to leaf node 222, a pointer to leaf node 224, and a pointer to leaf node 226. Intermediate node 212 includes a NodeID of "I1" and a TreeID of "1." Intermediate node 212 includes a first node key of "1" and a second node key of "2." The data key $k$ for leaf node 222 is a value that is less than or equal to the first node key. The data key $k$ for leaf node 224 is a value that is greater than the first node key and less than or equal to the second node key. The data key $k$ for leaf node 226 is a value that is greater than the second node key. The pointer to leaf node 222 indicates that traversing tree data structure 200 from intermediate node 212 to leaf node 222 will lead to the node with a data key of "1." The pointer to leaf node 224 indicates that traversing tree data structure 200 from intermediate node 212 to leaf node 224 will lead to the node with a data key of "2." The pointer to leaf node 226 indicates that traversing tree data structure 200 from intermediate node 212 to leaf node 226 will lead to the node with a data key of "3."

Intermediate node 214 includes a pointer to leaf node 228 and a pointer to leaf node 230. Intermediate node 212 includes a NodeID of "I2" and a TreeID of "1." Intermediate node 214 includes a node key of "4." The data key k for leaf node 228 is a value that is less than or equal to the node key. The data key k for leaf node 230 is a value that is greater than the node key. The pointer to leaf node 228 indicates that traversing tree data structure 200 from intermediate node 214 to leaf node 228 will lead to the node with a data key of "4." The pointer to leaf node 230 indicates that traversing tree data structure 200 from intermediate node 214 to leaf node 230 will lead the node with a data key of "5."

Leaf node 222 includes a data key-value pair of "1: DATA1." Leaf node 222 includes NodeID of "L1" and a TreeID of "1." To view the value associated with a data key of "1," tree data structure 200 is traversed from root node 202 to intermediate node 212 to leaf node 222. In some embodiments, leaf node 222 is configured to store metadata associated with a file. In some embodiments, leaf node 222 is configured to store data associated with a file. In other embodiments, leaf node 222 is configured to store a pointer to a file metadata tree. For example, leaf node 222 may store a pointer to a file metadata tree corresponding to a database file.

Leaf node 224 includes a data key-value pair of "2: DATA2." Leaf node 224 includes NodeID of "L2" and a TreeID of "1." To view the value associated with a data key of "2," tree data structure 200 is traversed from root node 202 to intermediate node 212 to leaf node 224. In some embodiments, leaf node 224 is configured to store metadata associated with a file. In some embodiments, leaf node 224 is configured to store data associated with a file. In other embodiments, leaf node 224 is configured to store a pointer to a file metadata tree. For example, leaf node 224 may store a pointer to a file metadata tree corresponding to a database file.

Leaf node 226 includes a data key-value pair of "3: DATA3." Leaf node 226 includes NodeID of "L3" and a TreeID of "1." To view the value associated with a data key of "3," tree data structure 200 is traversed from root node 202 to intermediate node 212 to leaf node 226. In some embodiments, leaf node 226 is configured to store metadata associated with a file. In some embodiments, leaf node 226 is configured to store data associated with a file. In other embodiments, leaf node 226 is configured to store a pointer to a file metadata tree. For example, leaf node 226 may store a pointer to a file metadata tree corresponding to a database file.

Leaf node 228 includes a data key-value pair of "4: DATA4." Leaf node 228 includes NodeID of "L4" and a TreeID of "1." To view the value associated with a data key of "4," tree data structure 200 is traversed from root node 202 to intermediate node 214 to leaf node 228. In some embodiments, leaf node 228 is configured to store metadata associated with a file. In some embodiments, leaf node 228 is configured to store data associated with a file. In other embodiments, leaf node 228 is configured to store a pointer to a file metadata tree. For example, leaf node 228 may store a pointer to a file metadata tree corresponding to a database file.

Leaf node 230 includes a data key-value pair of "5: DATA5." Leaf node 230 includes NodeID of "L5" and a TreeID of "1." To view the value associated with a data key of "5," tree data structure 200 is traversed from root node 202 to intermediate node 214 to leaf node 230. In some embodiments, leaf node 230 is configured to store metadata associated with a file. In some embodiments, leaf node 230 is configured to store data associated with a file. In other embodiments, leaf node 230 is configured to store a pointer to a file metadata tree. For example, leaf node 230 may store a pointer to a file metadata tree corresponding to a database file.

FIG. 2B is a block diagram illustrating an embodiment of a cloned snapshot tree. A snapshot tree is cloned when a snapshot tree is added to a tree data structure. A snapshot tree may be added to the tree data structure when a backup snapshot is received. In some embodiments, tree data structure 250 may be created by a storage system, such as secondary storage system 112. The file system data of a primary system, such as primary system 102, may be backed up to a secondary storage system, such as secondary storage system 112. A subsequent backup snapshot may correspond to a full backup snapshot or an incremental backup snapshot. The manner in which the file system data corresponding to the subsequent backup snapshot is stored in secondary storage system is represented by a tree data structure. The tree data structure corresponding to the subsequent backup snapshot is created by cloning a snapshot tree associated with a last backup.

In the example shown, the subsequent backup snapshot corresponds to an incremental backup snapshot. Tree data structure 250 includes root nodes 202, 204, intermediate nodes 212, 214, and leaf nodes 222, 224, 226, 228, and 230. Tree data structure 250 may be a snapshot of file system data at a particular point in time $t + n$. The tree data structure is used to capture different versions of file system data at different moments in time. The tree data structure may also efficiently locate desired metadata/data by traversing a particular version of a snapshot tree included in the tree data structure. In some embodiments, the tree data structure allows a chain of backup snapshot versions (i.e., snapshot trees) to be linked together by allowing a node of a later version of a snapshot tree to reference a node of a previous version of a snapshot tree. For example, a snapshot tree with root node 204 is linked to a snapshot tree with root node 202. Each time a backup snapshot is received, a new root node may be created and the new root node may include the same set of pointers included in the previous root node, that is the new root node of the snapshot may be linked to one or more intermediate nodes associated with a previous snapshot. The new root node also includes a different NodeID and a different TreeID. The TreeID is the view identifier associated with a view of the primary system associated with the backup snapshot for the particular moment in time.

In some embodiments, a root node is associated with a current view of the file system data. A current view still accepts one or more changes to the data. The TreeID of a root node indicates a snapshot with which the root node is associated. For example, root node 202 with a TreeID of "1" is associated with a first backup snapshot and root node 204 with a TreeID of "2" is associated with a second backup snapshot. In the example shown, root node 204 is associated with a current view of the file system data.

In other embodiments, a root node is associated with a snapshot view of the file system data. A snapshot view represents a state of the file system data at a particular moment in time in the past and is not updated. In the example shown, root node 202 is associated with a snapshot view of the file system data.

In the example shown, root node 204 is a copy of root node 202. Similar to root node 202, root node 204 includes the same pointers as root node 202. Root node 204 includes a first set of pointers to intermediate node 212. The first set of pointers associated with a data key k less than or equal to the node key (e.g., "1," "2," or "3") indicates that traversing tree data structure 250 from root node 204 to intermediate node 212 will lead to a leaf node with a data key of "1," "2," or "3." Root node 204 includes a second set of pointers to intermediate node 214. The second set of pointers associated with a data key k greater than the node key indicates that traversing tree data structure 250 from root node 204 to intermediate node 214 will lead to a leaf node with a data key of "4" or "5." Root node 204 includes a NodeID of "R2" and a TreeID of "2." The NodeID identifies the name of the node. The TreeID identifies the backup snapshot with which the node is associated.

FIG. 2C is a block diagram illustrating an embodiment of modifying a snapshot tree. A snapshot tree may be modified based on the data included in a backup snapshot. In the example shown, tree data structure 255 is modified based on data included in an incremental backup snapshot. Tree data structure 255 is modified by a file system manager, such as file system manager 115. A snapshot tree with a root node 204 may be a current view of the file system data at time $t + n + m$, for example, at time $t_2$. A current view represents a state of the file system data that is up-to-date and capable of receiving one or more modifications to the snapshot tree that correspond to modifications to the file system data. Because a snapshot represents a perspective of the file system data that is "frozen" in time, one or more copies of one or more nodes affected by a change to file system data, are made.

In the example shown, the value *"DATA4 "* has been modified to be "*DATA4′.*" In some embodiments, the value of a key value pair has been modified. For example, the value of *"DATA4 "* may be a pointer to a file metadata tree corresponding to a first version of a database file and the value of "*DATA4′*" may be a pointer to a file metadata tree corresponding to the second version of the database file. In other embodiments, the value of the key pair is the data associated with a content file that is smaller than or equal to a limit size. In other embodiments, the value of the key value pair points to a different file metadata tree. The different file metadata tree may be a modified version of the file metadata tree that the leaf node previously pointed.

At $t_2$, the file system manager starts at root node 204 because that is the root node associated with snapshot tree at time $t_2$ (i.e., the root node associated with the last backup snapshot). The value "*DATA4*" is associated with the data key "4." The file system manager traverses snapshot tree 255 from root node 204 until it reaches a target node, in this example, leaf node 228. The file system manager compares the TreeID at each intermediate node and leaf node with the TreeID of the root node. In the event the TreeID of a node matches the TreeID of the root node, the file system manager proceeds to the next node. In the event the TreeID of a node does not match the TreeID of the root node, a shadow copy of the node with the non-matching TreeID is made. For example, to reach a leaf node with a data key of "4," the file system manager begins at root node 204 and proceeds to intermediate node 214. The file system manager compares the TreeID of intermediate node 214 with the TreeID of root node 204, determines that the TreeID of intermediate node 214 does not match the TreeID of root node 204, and creates a copy of intermediate node 214. The intermediate node copy 216 includes the same set of pointers as intermediate node 214 but includes a TreeID of "2" to match the TreeID of root node 204. The file system manager updates a pointer of root node 204 to point to intermediate node 216 instead of pointing to intermediate node 214. The file system manager traverses tree data structure 255 from intermediate node 216 to leaf node 228, determines that the TreeID of leaf node 228 does not match the TreeID of root node 204, and creates a copy of leaf node 228. Leaf node copy 232 stores the modified value "*DATA4'*" and includes the same TreeID as root node 204. The file system manager updates a pointer of intermediate node 216 to point to leaf node 232 instead of pointing to leaf node 228.

In some embodiments, leaf node 232 stores the value of a key value pair that has been modified. In other embodiments, leaf node 232 stores the modified data of associated with a file that is smaller than or equal to a limit size. In other embodiments, leaf node 232 stores a pointer to a file metadata tree corresponding to a file, such as a database file.

FIG. 2D is a block diagram illustrating an embodiment of a modified snapshot tree. Tree data structure 255 shown in FIG. 2D illustrates a result of the modifications made to a snapshot tree as described with respect to FIG. 2C.

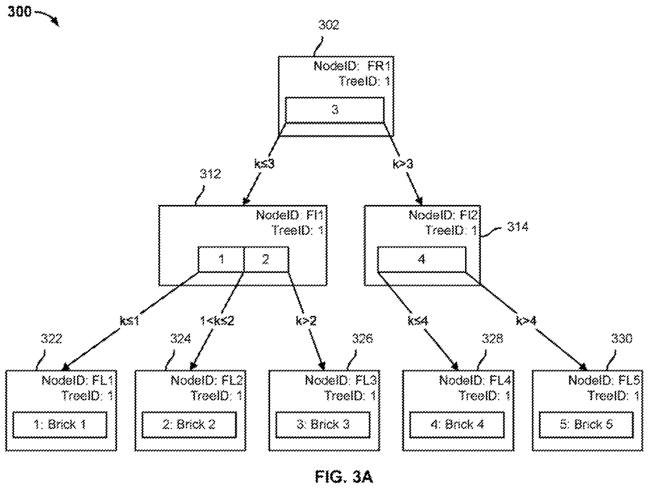

FIG. 3A is a block diagram illustrating an embodiment of a tree data structure. In some embodiments, tree data structure 300 is created by a storage system, such as secondary storage system 112. In the example shown, tree data structure 300 corresponds to a file and stores the metadata associated with the file. For example, tree data structure 300 may correspond to a database file and may be used to store the metadata associated with the database file. A leaf node of a snapshot tree associated with file system data, such as a leaf node of tree data structures 200, 250, 255, may include a pointer to a tree data structure corresponding to a file, such as tree data structure 300. A tree data structure corresponding to a file (i.e., a "file metadata tree") is a snapshot tree but is used to organize the data associated with a file that are stored on the secondary storage system. Tree data structure 300 may be referred to as a "metadata structure" or a "snapshot structure."

A tree data structure corresponding to a content file (e.g., database file) at a particular point in time (e.g., a particular version) may be comprised of a root node, one or more levels of one or more intermediate nodes, and one or more leaf nodes. In some embodiments, a tree data structure corresponding to a content file is comprised of a root node and one or more leaf nodes without any intermediate nodes. Tree data structure 300 may be a snapshot of a content file at a particular point in time *t*, for example at time to. A tree data structure associated with file system data may include one or more pointers to one or more tree data structures corresponding to one or more content files.

In the example shown, tree data structure 300 includes a file root node 302, file intermediate nodes 312, 314, and file leaf nodes 322, 324, 326, 328, 330. Although tree data structure 300 includes one intermediate level between root node 302 and leaf nodes 322, 324, 326, 328, 330, any number of intermediate levels may be implemented. Similar of the snapshot trees described above, each node includes a "NodeID" that identifies the node and a "TreeID" that identifies a snapshot/view with which the node is associated.

In the example shown, root node 302 includes a pointer to intermediate node 312 and a pointer to intermediate node 314. Root node 202 includes a NodeID of "FR1" and a TreeID of "1." The NodeID identifies the name of the node. The TreeID identifies the snapshot/view with which the node is associated.

In the example shown, intermediate node 312 includes a pointer to leaf node 322, a pointer to leaf node 324, and a pointer to leaf node 326. Intermediate node 312 includes a NodeID of "FI1" and a TreeID of "1." Intermediate node 312 includes a first node key and a second node key. The data key k for leaf node 322 is a value that is less than or equal to the first node key. The data key for leaf node 324 is a value that is greater than the first node key and less than or equal to the second node key. The data key for leaf node 326 is a value that is greater than the second node key. The pointer to leaf node 322 indicates that traversing tree data structure 300 from intermediate node 312 to leaf node 322 will lead to the node with a data key of "1." The pointer to leaf node 324 indicates that traversing tree data structure 300 from intermediate node 312 to leaf node 324 will lead to the node with a data key of "2." The pointer to leaf node 326 indicates that traversing tree data structure 300 from intermediate node 312 to leaf node 326 will lead to the node with a data key of "3."

In the example shown, intermediate node 314 includes a pointer to leaf node 328 and a pointer to leaf node 330. Intermediate node 314 includes a NodeID of "FI2" and a TreeID of "1." Intermediate node 314 includes a node key. The data key *k* for leaf node 328 is a value that is less than or equal to the node key. The data key for leaf node 330 is a value that is greater than the node key. The pointer to leaf node 328 indicates that traversing tree data structure 300 from intermediate node 314 to leaf node 328 will lead to the node with a data key of "4." The pointer to leaf node 330 indicates that traversing tree data structure 300 from intermediate node 314 to leaf node 330 will lead the node with a data key of "5."

Leaf node 322 includes a data key-value pair of "1: Brick 1." "Brick 1" is a brick identifier that identifies the data brick containing one or more data chunks associated with a content file corresponding to tree data structure 300. Leaf node 322 includes NodeID of "FL1" and a TreeID of "1." To view the value associated with a data key of "1," tree data structure 300 is traversed from root node 302 to intermediate node 312 to leaf node 322.

Leaf node 324 includes a data key-value pair of "2: Brick 2." "Brick 2" is a brick identifier that identifies the data brick containing one or more data chunks associated with a content file corresponding to tree data structure 300. Leaf node 324 includes NodeID of "FL2" and a TreeID of "1." To view the value associated with a data key of "2," tree data structure 300 is traversed from root node 302 to intermediate node 312 to leaf node 324.

Leaf node 326 includes a data key-value pair of "3: Brick 3." "Brick 3" is a brick identifier that identifies the data brick containing one or more data chunks associated with a content file corresponding to tree data structure 300. Leaf node 326 includes NodeID of "FL3" and a TreeID of "1." To view the value associated with a data key of "3," tree data structure 300 is traversed from root node 302 to intermediate node 312 to leaf node 326.

Leaf node 328 includes a data key-value pair of "4: Brick 4." "Brick 4" is a brick identifier that identifies the data brick containing one or more data chunks associated with a content file corresponding to tree data structure 300. Leaf node 328 includes NodeID of "FL4" and a TreeID of "1." To view the value associated with a data key of "4," tree data structure 300 is traversed from root node 302 to intermediate node 314 to leaf node 328.

Leaf node 330 includes a data key-value pair of "5: Brick 5." "Brick 5" is a brick identifier that identifies the data brick containing one or more data chunks associated with a content file corresponding to tree data structure 300. Leaf node 330 includes NodeID of "FL5" and a TreeID of "1." To view the value associated with a data key of "5," tree data structure 300 is traversed from root node 302 to intermediate node 314 to leaf node 330.

A file, such as a database file, may be comprised of a plurality of data chunks. A brick may store one or more data chunks. In the example shown, leaf nodes 322, 324, 326, 328, 330 each store a corresponding brick identifier. A metadata store may include a data structure that matches a brick identifier with a corresponding location (physical location) of the one or more data chunks comprising the brick. In some embodiments, the data structure matches a brick identifier with a file offset corresponding to data and a database file that corresponds to the file offset. A data brick may include one or more data chunks. The location of the data brick is identified using a data structure (e.g., list, table, etc.) stored in a metadata store that matches brick identifiers to a physical storage location or the location of the data brick may be identified based on the pointer to the data brick. In some embodiments, the data structure associates brick identifiers with chunk identifiers (e.g., hashes). The data structure or a different data structure associates chunk identifiers with a brick offset. A chunk may be associated with a chunk table, which contains a corresponding chunk file ID. The chunk file ID is associated with a chunk file table, which indicates the location of the data (e.g., an offset in a data brick).

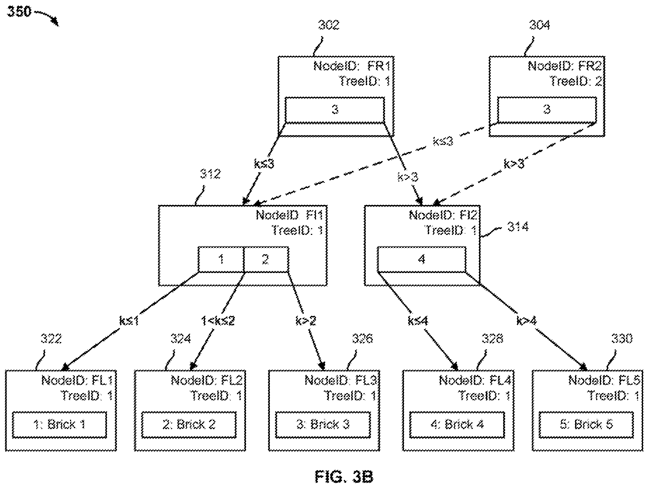

FIG. 3B is a block diagram illustrating an embodiment of a cloned file metadata tree. In some embodiments, tree data structure 350 is created by a storage system, such as secondary storage system 112. A tree data structure corresponding to a file, such as a database file, is a snapshot tree, but stores metadata associated with the file (e.g., the metadata associated with the content file).

The tree data structure corresponding to a file can be used to capture different versions of the file at different moments in time. In some embodiments, the tree data structure allows a chain of file metadata trees corresponding to different versions of a file to be linked together by allowing a node of a later version of a file metadata tree to reference a node of a previous version of a file metadata tree. A file metadata tree is comprised of a root node, one or more levels of one or more intermediate nodes, and one or more leaf nodes.

A root node or an intermediate node of a version of a file metadata tree may reference an intermediate node or a leaf node of a previous version of a file metadata tree. Similar to the snapshot tree structure, the file metadata tree structure allows different versions of file data to share nodes and allows changes to a content file to be tracked. When a backup snapshot is received, a root node of the file metadata tree may be linked to one or more intermediate nodes associated with a previous file metadata tree. This may occur when the file is included in both backup snapshots.

In the example shown, tree data structure 350 includes a first file metadata tree comprising root node 302, intermediate nodes 312, 314, and leaf nodes 322, 324, 326, 328, and 330. Tree data structure 350 also includes a second file metadata tree that may be a snapshot of file data at a particular point in time $t + n$, for example at time $t_1$. The second file metadata tree is comprised of root node 304, intermediate nodes 312, 314, and leaf nodes 322, 324, 326, 328, and 330. The first file metadata tree may correspond to a first version of a database file and the second file metadata tree may correspond to a second version of the database file.

To create a snapshot of the file data at time $t + n$, a new root node is created. The new root node is a clone of a previous root node and includes the same set of pointers as the previous root node. In the example shown, root node 304 includes a set of pointers to intermediate nodes 312, 314, which are intermediate nodes associated with a previous snapshot. The new root node also includes a different NodeID and a different TreeID. The TreeID is the view identifier associated with a view of the file metadata tree at a particular moment in time. In some embodiments, root node 304 is associated with a current view of the file data. The current view may represent a state of the file data that is up-to-date and is capable of receiving one or more modifications to the file metadata tree that correspond to modifications to the file data. The TreeID of a root node indicates a snapshot with which the root node is associated. For example, root node 302 with a TreeID of "1" is associated with a first backup snapshot and root node 304 with a TreeID of "2" is associated with a second backup snapshot. In other embodiments, root node 304 is associated with a snapshot view of the file data. A snapshot view represents a state of the file data at a particular moment in time in the past and is not updated.

In the example shown, root node 304 is a copy of root node 302. Similar to root node 302, root node 304 includes the same pointers as root node 302. Root node 304 includes a first set of pointers to intermediate node 312. The first set of pointers associated with a data key (e.g., "1," "2," or "3") less than or equal the node key indicates that traversing a file metadata tree included in tree data structure 350 from root node 304 to intermediate node 312 will lead to a leaf node with a data key of "1," "2," or "3." Root node 304 includes a second set of pointers to intermediate node 314. The second set of pointers associated with a data key greater than the node key indicates that traversing a file metadata tree included in tree data structure 350 from root node 304 to intermediate node 314 will lead to a leaf node with a data key of "4" or "5." Root node 304 includes a NodeID of "FR2" and a TreeID of "2." The NodeID identifies the name of the node. The TreeID identifies the backup snapshot with which the node is associated.

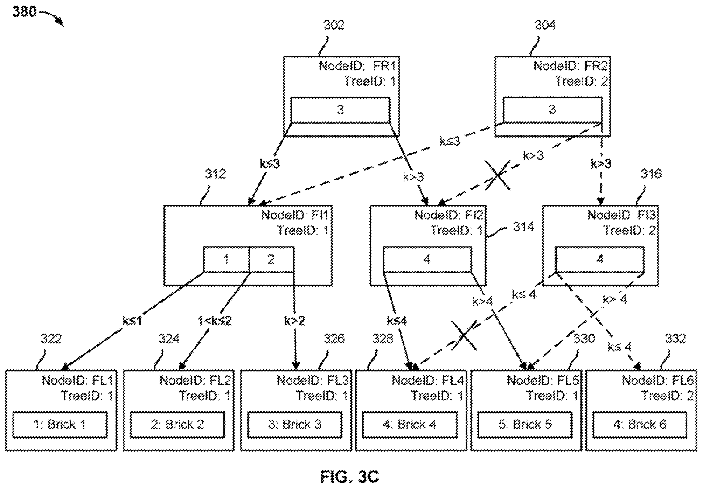

FIG. 3C is a block diagram illustrating an embodiment of modifying a file metadata tree of a tree data structure. In the example shown, tree data structure 380 is modified based on data included in an incremental backup snapshot. Tree data structure 380 is modified by a file system manager, such as file system manager 115. A file metadata tree with root node 304 may be a current view of the file data at time $t + n + m$, for example, at time $t_2$. A current view represents a state of the file data that is up-to-date and capable of receiving one or more modifications to the file metadata tree that correspond to modifications to the file system data. Because a snapshot represents a perspective of the file data that is "frozen" in time, one or more copies of one or more nodes affected by a change to file data, are made.

In some embodiments, the file data is modified such that one of the data chunks is replaced by another data chunk. When a data chunk of file data associated with a previous backup snapshot is replaced with a new data chunk, the data brick storing the data chunk is different. A leaf node of a file metadata tree stores a brick identifier associated with a particular brick containing the data chunk. To represent this modification to the file data, a corresponding modification is made to a current view of a file metadata tree. The current view of the file metadata tree is modified because the previous file metadata tree is a snapshot view and can no longer be modified. The data chunk of the file data that was replaced has a corresponding leaf node in the previous file metadata tree. A new leaf node in the current view of the file metadata tree is created, as described herein, that corresponds to the new data chunk. The new leaf node includes an identifier associated with the current view. The new leaf node may also store the chunk identifier associated with the modified data chunk.

In the example shown, a data chunk included in "Brick 4" has been modified. The data chunk included in "Brick 4" has been replaced with a data chunk included in "Brick 6." At $t_2$, the file system manager starts at root node 304 because that is the root node associated with the file metadata tree at time $t_2$. The value "Brick 4" is associated with the data key "4." The file system manager traverses tree data structure 380 from root node 304 until it reaches a target node, in this example, leaf node 328. The file system manager compares the TreeID at each intermediate node and leaf node with the TreeID of the root node. In the event the TreeID of a node matches the TreeID of the root node, the file system manager proceeds to the next node. In the event the TreeID of a node does not match the TreeID of the root node, a shadow copy of the node with the non-matching TreeID is made. For example, to reach a leaf node with a data key of "4," the file system manager begins at root node 304 and proceeds to intermediate node 314. The file system manager compares the TreeID of intermediate node 314 with the TreeID of root node 304, determines that the TreeID of intermediate node 314 does not match the TreeID of root node 304, and creates a copy of intermediate node 314. The intermediate node copy 316 includes the same set of pointers as intermediate node 314 but includes a TreeID of "2" to match the TreeID of root node 304. The file system manager updates a pointer of root node 304 to point to intermediate node 316 instead of pointing to intermediate node 314. The file system manager traverses tree data structure 380 from intermediate node 316 to leaf node 328, determines that the TreeID of leaf node 328 does not match the TreeID of root node 304, and creates a copy of leaf node 328. Leaf node 332 is a copy of leaf node 328 but stores the brick identifier "Brick 6" and includes the same TreeID as root node 304. The file system manager updates a pointer of intermediate node 316 to point to leaf node 332 instead of pointing to leaf node 328.

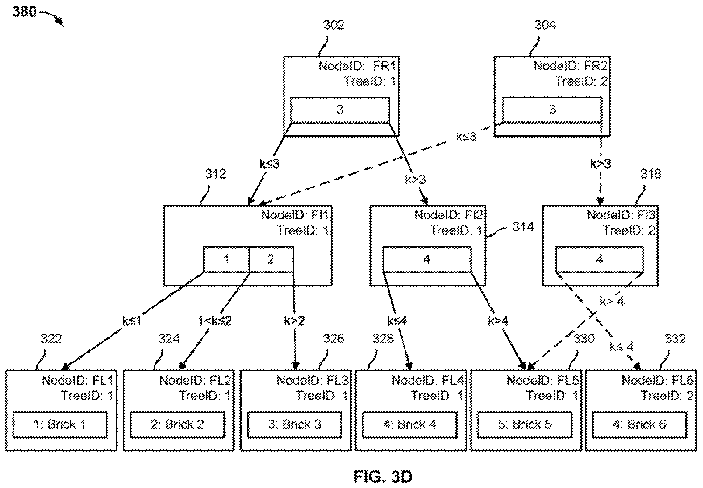

FIG. 3D is a block diagram illustrating an embodiment of a modified file metadata tree. The file metadata tree 380 shown in FIG. 3D illustrates a result of the modifications made to file metadata tree 380 as described with respect to FIG. 3C.

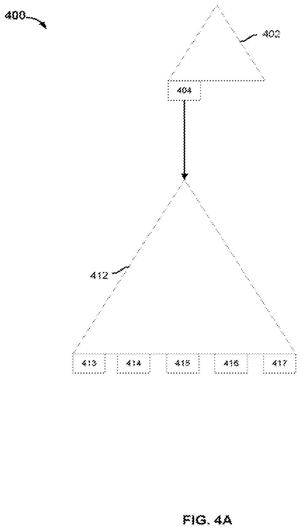

FIG. 4A is a diagram illustrating an embodiment of a view of file system data. In the example shown, file system data view 400 may be generated by a file system manager, such as file system manager 117.

File system data view 400 may correspond to a first backup snapshot of file system data. File system data view 400 includes a snapshot tree 402 and file metadata tree 412. Snapshot tree 402 includes leaf node 404. Leaf node 404 includes a pointer to a root node of file metadata tree 412. Snapshot tree 402 may include other leaf nodes that are not shown for explanation purposes. The other leaf nodes may include pointers to other corresponding file metadata trees.

File metadata tree 412 is configured to store the metadata associated with a first version of a content file. The content file may correspond to a database file. File metadata tree includes leaf nodes 413, 414, 415, 416, 417. Each leaf node has a corresponding identifier of a data brick containing one or more data chunks of the content file or a corresponding pointer to the data brick containing the one or more data chunks of the content file.

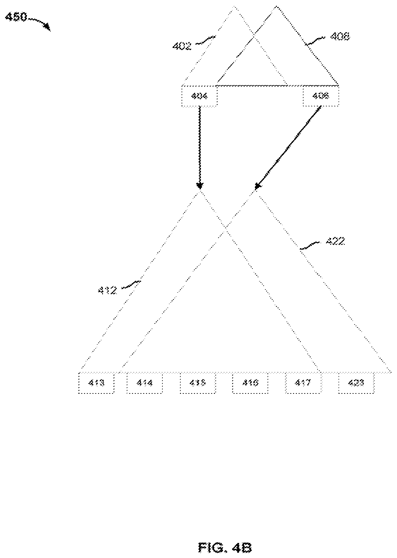

FIG. 4B is a diagram illustrating an embodiment of a view of file system data. In the example shown, file system data view 450 is generated by a file system manager, such as file system manager 115.

In the example shown, file system data view 450 corresponds to a second backup snapshot (e.g., an incremental backup snapshot) of file system data. File system data view 400 is illustrated next to file system data view 450. File system data view 450 includes a snapshot tree 408 and file metadata tree 422. Snapshot tree 408 includes one or more nodes that are shared with snapshot tree 402. Snapshot tree 408 includes leaf node 406, which is a leaf node not shared with snapshot tree 402. Leaf node 406 includes a pointer to a root node of file metadata tree 422. Snapshot tree 408 may include other leaf nodes that are not shown for explanation purposes. The other leaf nodes may include pointers to other corresponding file metadata trees.

File metadata tree 422 is configured to store the metadata associated with a second version of the content file. For example, file metadata tree 422 may be configured to store the metadata associated with a second version of a database file. File metadata tree 422 includes leaf nodes 414, 415, 416, 417, 423. Some of the data associated with the content file corresponding to file metadata tree 422 has not changed since the last backup snapshot. In this example, the data associated with leaf nodes 414, 415, 416, 417 has not changed since the first backup snapshot. The data associated with leaf node 423 has been added in the second version of the content file.

Leaf node 423 is associated with data that was not included in the first backup snapshot of file system data. Leaf node 423 may be determined to be associated with the second backup snapshot by traversing the snapshot tree associated with the second backup snapshot. Snapshot tree 408 is the snapshot tree associated with the second backup snapshot. Snapshot tree 408 is traversed to leaf node 406, which includes a pointer to the root node of file metadata tree 422. File metadata tree 422 is traversed to each of the leaf nodes. Each leaf node of file metadata tree 422 has an associated view identifier. In the event the view identifier associated with a leaf node matches the view identifier associated with the root node of the file metadata tree, the data associated with the leaf node is determined to be associated with the second backup snapshot, that is, the data was added to the primary system after the first backup snapshot. In some embodiments, the file corresponding to file metadata tree 422 has been modified to include one or more data chunks associated with leaf node 423 instead of the one or more data chunks associated with leaf node 413.

Accordingly, for this example, the size of the data associated with leaf node 423 is the amount of data that has changed since a previous backup snapshot was received from the primary system 102. The secondary storage system 112 determines the amount of time needed to migrate the data associated with leaf node 423, but more generally it determines the amount of time needed to provide data that has not yet been migrated to a database server such as is hosted in target server 122.

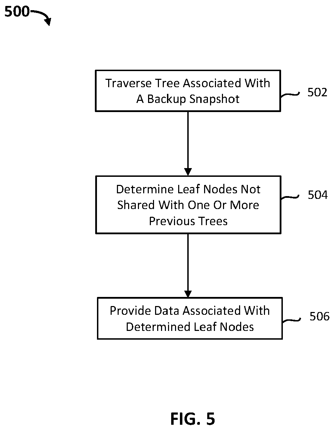

FIG. 5 is a flow chart illustrating a process 500 for determining changes associated with different backup versions created by the secondary storage system 112, when the backup versions are stored using a tree data structure as explained above with reference to Figures 2A to 4B.

A tree is a representation of a fully hydrated backup because it provides a complete view of the primary system at a particular moment in time. A fully hydrated backup is a backup that is ready for use without having to reconstruct a plurality of backups to use it. Any file stored on the primary system at a particular time and the file's contents, for which there is an associated backup snapshot, may be determined from the tree, regardless if the associated backup snapshot was a full backup snapshot or an incremental backup snapshot. Creating an incremental backup snapshot of a primary system may only include copying data of the primary system that was not previously backed up. However, a tree associated with an incremental backup snapshot provides a complete view of the primary system at the particular moment in time because it includes references to data of the primary system that was previously stored. For example, a root node associated with the file system metadata snapshot tree may include one or more references to nodes associated with one or more previous backup snapshots and one or more references to nodes associated with the current backup snapshot. A tree associated with a backup snapshot has a particular root node. The particular root node has an associated view identifier. The view identifier is associated with a particular backup snapshot. The tree associated with the backup snapshot is traversed to identify nodes of the tree that have the same view identifier as the root node associated with the backup snapshot.

At step 502, a tree associated with a backup snapshot is traversed. The tree associated with the backup snapshot may be traversed to determine data associated with one or more database files that were not previously included in a previous backup snapshot. At step 504, one or more leaf nodes not shared with one or more previous trees are determined. The one or more leaf nodes not shared with one or more previous trees are the one or more leaf nodes that have the same view identifier as the root node of the tree associated with the backup snapshot. The one or more leaf nodes not shared with one or more previous trees include corresponding references to data bricks. A data brick includes one or more data chunks. The corresponding data bricks included in the one or more leaf nodes not shared with one or more previous trees correspond to data that was included in the previous backup version. The one or more data chunks may correspond to data associated with one or more database files that was not previously migrated. In preferred arrangements only the non-shared nodes of the tree data structure need to be traversed because the shared nodes contain chunks that have not changed. This process for determining changes to the content of the database hosted on the first server since a previous backup process advantageously avoids inefficiently traversing metadata, in contrast to known approaches.

An illustrative example of non-shared nodes is a backup version that is later in time but constitutes a reversion of the file contents to an earlier backup version (e.g. as a result of undoing a delete operation on a file). In this example, there will be no non-shared nodes, as all of the blocks will already be present on the secondary storage system as part of the earlier backup version.

At step 506, data associated with the one or more determined leaf nodes is provided. A leaf node of a file metadata tree may include an identifier of a data brick associated with one or more data chunks of the file. A data brick may include one or more data chunks. The location of the data brick may be identified using a data structure (e.g., list, table, etc.) stored in a metadata store that matches data brick identifiers to a physical storage location. In some embodiments, the data structure associates brick identifiers with chunk identifiers (e.g., hashes). The data structure or a different data structure may associate chunk identifiers with a brick offset. A chunk may be associated with a chunk table, which contains a corresponding chunk file ID. The chunk file ID is associated with a chunk file table, which indicates the location of the data (e.g., an offset in a data brick). The data associated with the one or more determined leaf nodes may be identified based on the brick information and provided.

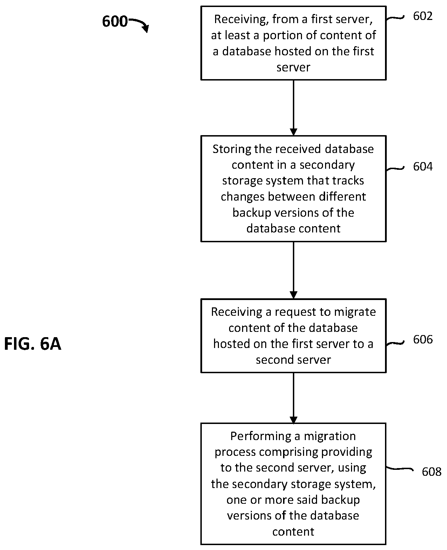

FIG. 6A is a flow chart illustrating a process 600 for migrating database content in accordance with some embodiments. In the example shown, process 600 is implemented by secondary storage system 112.

At step 602 at least a portion of content of a database hosted on a first server are received from a first server. A first server acts as a primary system and includes a source database. The primary system stores data associated with the database in one or more database files. The one or more database files may include a primary database file and a log file. A storage system, such as a secondary storage system, causes the primary system to perform a backup process, so as to generate a backup snapshot, according to a backup policy and store, as a particular backup version, the backup snapshot to the secondary storage system.

At step 604, the received database content is stored in the secondary storage system 112 that tracks changes between different backup versions of the database contents. The secondary storage system 112 ingests and stores the file system data of the backup snapshot as a backup version. A file system manager of the secondary storage system preferably organizes the file system data of the backup version using a tree data structure. The tree data structure provides a view of the file system data corresponding to a backup version. The view of the file system data corresponding to the backup version is comprised of a file system metadata snapshot tree and one or more file metadata trees.

A file metadata tree is a structure that stores the metadata associated with a file and corresponds to one of the files included in the backup snapshot received from the first server. For example, a file metadata tree may correspond to one of the database files. The file metadata tree can be used to capture different versions of the file (e.g., different versions of a database file that is created at and hosted by the first server) at different moments in time. In some embodiments, the tree data structure allows a chain of file metadata trees corresponding to different versions of a file to be linked together by allowing a node of a later version of a file metadata tree to reference a node of a previous version of a file metadata tree. These versions of a file metadata tree correspond to different backup versions of the database files of the primary system 102.

A file metadata tree is comprised of a root node, one or more levels of one or more intermediate nodes, and one or more leaf nodes. A root node or an intermediate node of a version of a file metadata tree may reference an intermediate node or a leaf node of a previous version of a file metadata tree. The file metadata tree structure may allow different versions of a file to share nodes and allows changes to the file to be tracked. When a backup snapshot is received from the first server, the secondary storage system causes a link to be made from a root node of the file metadata tree and one or more intermediate nodes associated with a previous file metadata tree. This may occur when data associated with the file is included in both backup snapshots received from the first server.

At step 606, a request to migrate content of the database hosted on the first server to a second (target) server is received, causing the one or more backup versions of database content associated with the source database (e.g., one or more database files) to be migrated (step 608) from the secondary storage system to a second server hosting the target database. One or more versions of the database contents stored at a secondary storage system may be provided from the secondary storage system to the second server. The secondary storage system may traverse a tree data structure associated with the latest version of the database content and locate the data associated with the latest backup version of the database contents.

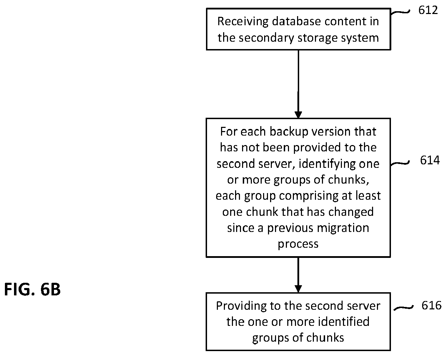

After the migration process for the one or more backup versions is complete, the database content stored on the first server may be inconsistent with the database content stored on the second (target) server because the users may have continued to make changes to the database content stored on the first server while the migration process is ongoing, as explained above. Further, primary system may provide one or more subsequent incremental backup snapshots to the secondary storage system while the data associated with the one or more database files is being migrated in the background from the secondary storage system to the target server hosting the target the database. The secondary storage system may be configured to migrate these changes to the second server hosting the target database as will now be explained with reference to FIG. 6B.

At step 612, database content is received at the secondary storage system from the primary system in the form of backup snapshots comprising data associated with the one or more database files for which the backup process has not previously been performed.

At step 614, a tree data structure is updated based on the one or more subsequent backup snapshots. For each backup snapshot that has not yet been provided to the second server, a tree data structure associated with the one or more database files may be updated based on identifying one or more groups of chunks, each group comprising at least one chunk that has changed since a previous migration process. This update to the tree data structure can be referred to as a backup version maintained by the secondary storage system.

When a backup snapshot is received, a new root node associated with a file metadata tree corresponding to the backup snapshot may be created and the root node of the file metadata tree may be linked to one or more intermediate nodes associated with a previous file metadata tree. The previous file metadata tree may correspond to a version of a database file included in a previous backup snapshot. A file metadata tree is a snapshot structure that stores the metadata associated with a database file and can be used to capture different versions of the database file at different moments in time. The tree data structure may allow a chain of file metadata trees corresponding to different versions of a database file to be linked together, by allowing a node of a later version of a file metadata tree corresponding to a later version of a database file to reference a node of a previous file metadata tree corresponding to a previous version of the database file.

At step 616, the one or more identified groups of chunks for each backup version that has not been provided to the second server (target) is migrated. The secondary storage system may traverse the tree data structure associated with a version of a database file that was included in the one or more subsequent backup snapshots. The secondary storage system may traverse the tree from a root node associated with one of the one or more subsequent backup snapshots to identify data that has not been migrated as part of a previous migration process. The identified data is migrated from the secondary storage system to the target server hosting the target database.

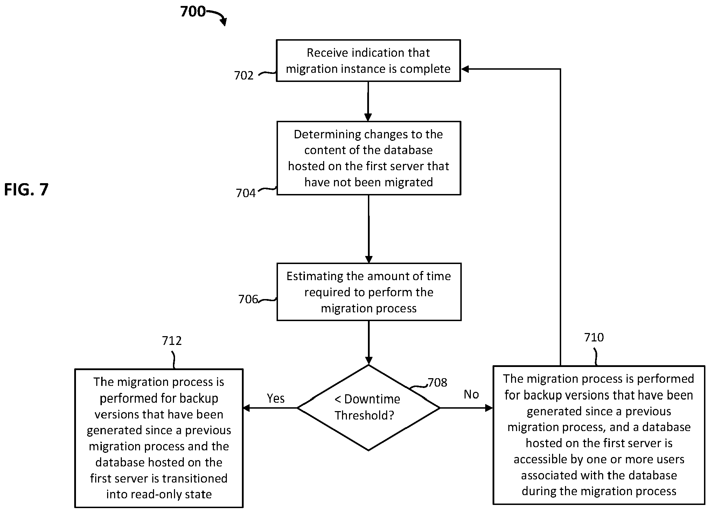

FIG. 7 is a flow chart illustrating a process for generating an estimated amount of time to complete a migration of database content in accordance with some embodiments. In the example shown, process 700 is implemented by a storage system, such as secondary storage system 112.

At step 702, an indication that an instance of the migration process is completed is received. The second server provides the indication to a secondary storage system that was performing the migration process. In other embodiments, a data migration module of the secondary storage system provides the indication that the instance of the migration process is complete to one or more processors of the secondary storage system.

At step 704, changes to the content of the database hosted on the first server and that have not been migrated to the second server are determined. At step 706, an amount of time to migrate the identified changes in the form of a subsequent backup snapshot is estimated. Using a suitable application, the secondary storage system notifies an operator the estimated amount of time to migrate the changes to the content of the database hosted on the first server.

Historical data relating to migration processes can be extrapolated to determine an estimated amount of time to perform the migration process for the data yet to be migrated. For example, historical data can be input to a neural network, which determines an estimated amount of time to perform the migration process for the data yet to be migrated.

Alternatively, the estimated amount of time can be determined using an algorithm that is dependent upon one or more of: number of backup versions on the secondary storage system 112 that have been generated since a previous migration process, number of identified groups of chunks, number of bytes in the one or more identified groups of chunks and time to write the bytes to the second (target) server.

An amount of time to perform a backup process and / or a migration process may be evaluated. As regards the backup process, the amount of time required to perform the backup process for a portion of content hosted in the first server that has changed since the backup process was last performed is estimated. As regards the migration process, the amount of time to perform the migration process for one or more backup versions held by the secondary storage system 112 is estimated. Exemplary equations for estimating this time are:

$$T1 \propto xC1 + yS1 \qquad \text{Equation (1)}$$

$$T2 \propto aC2 + bS2 \qquad \text{Equation (2)}$$

With regards to Equation (1), C1 is the number of change areas on the primary system 102; S1 is the size of the change areas; coefficient x reflects the input/output overhead related to writing an area to the secondary storage system 112; and coefficient y reflects the time required to write the bytes to the secondary storage system 112. This equation can be used by the secondary storage system 112 to estimate the amount of time to write the data making up the change areas received from the primary system 102. With regards to Equation (2), C2 is the number of change areas on the secondary storage system 112; S2 is the size of the change areas; coefficient a reflects the input/output overhead related to writing an area to the target database 123; and coefficient b reflects the time required to write the bytes to the target database 123. This equation can be used by the secondary storage system 112 to estimate the amount of time to write one or more backup versions (i.e. those versions comprising the changed areas C2 of size S2) to the target database 123.

Recalling that change areas on the primary system 102 are evaluated with regards to blocks of data on the primary system and that change areas on the secondary storage system 112 are evaluated with regards to chunks of data on the secondary storage system, it is to be appreciated that, when the combined amount of time to perform a backup process and a migration process is to be evaluated, a single algorithm can be utilized, which takes account of both types of change areas.

These principles will now be exemplified by means of an example, in which ten backup versions (S1 to S10) are represented in the tree structure on the secondary storage system, and the migration process has been performed for backup versions S1-S8. Further changes have been made to the data held on storage volume 104 since backup snapshot corresponding to S10 was received by the secondary storage system, so a backup snapshot will need to be created by the primary system 102 and ingested by the secondary storage system. This would be a candidate final backup version S11.

The secondary storage system 112 may use the change block tracker 105 at the first server (source) to determine how many blocks have changed since S10. The secondary storage system 112 may invoke the Coalesce Process on the primary system 102 in order to group the blocks into a group of blocks that constitutes a changed area for this backup snapshot. Two separate time estimates are then determined: time to perform the backup process in order to generate candidate final backup version S11 on the secondary storage system 112 (e.g. using Equation (1)) and time to perform the migration process for backup versions S8-S11 (e.g. using Equation (2)). At step 708, it is determined whether the amount of time to migrate the data associated with backup versions S8-S11 is less than a downtime threshold.

In some embodiments, the database is automatically transitioned into a state in which write operations by the database are prevented and the remaining portion of the one or more database files is migrated from the secondary storage system to the target server hosting the upgraded target database in the event the amount of downtime associated with the data migrate is less than a downtime threshold (e.g., 1 minute). As explained above, the downtime threshold may be specified by an operator associated with the database. In the event the amount of downtime associated with the data migration is not less than a downtime threshold, process 700 proceeds to 710. In the event the amount of downtime associated with the data migration is less than a downtime threshold, process 700 proceeds to 712.

At step 710, the migration process is performed for backup versions that have been generated since a previous migration process, and a database hosted on the first server continues to be accessible by one or more users associated with the database during the migration process.

In the event the operator associated with the current version of the database agrees to prevent write operations to be made by the database and migrate the remaining portion of the one or more database files (e.g., the amount of downtime is not too long), the source database may be transitioned into a read-only mode. Alternatively, the primary system may be isolated from external inputs. In either case the secondary storage system migrates the remaining portion of the one or more database files to the target server hosting the target database.

Preventing write operations renders a database temporarily unavailable and may cause the database to appear offline. Alternatively, the database may appear online, and continue to perform read operations only, which is to say that users can continue to request data from the database but cannot write to the database. After being transitioned into the read-only state, the database hosted on the first server may be shut down. When a final migration process takes place and the intention is for all users to be permanently directed to the target database, a shutdown will occur. After the data migration is completed, the one or more users associated with the database are reassigned to become one or more users associated with the upgraded version of the database.

A particular use case relates to scheduled migration events. It is generally accepted that a migration of files from a database during periods should be scheduled during times in which the number of writes is low, such as when users are not using the database, e.g. during traditionally understood non-working hours. However, because databases such as database 103 of the primary system 102 may be hosted in different geographical regions, for which the non-working hours vary as between those regions, predicting what those non-working hours are can be challenging. By utilizing techniques according to the disclosure, in particular by evaluating the amount of time required to backup and migrate changes made to files of the database 103 since a last migration process was performed, then if a substantial number of changes have been made since the last migration process, such that the amount of downtime associated with backing up and migrating that set of changes is higher than the threshold, the database would not be transitioned into a read-only state at the scheduled migration time. This provides flexibility and enables the secondary storage system 112 to provide autonomous and controlled migration of database content.

Although the foregoing embodiments have been described in some detail for purposes of clarity of understanding, the invention is not limited to the details provided. There are many alternative ways of implementing the invention. The disclosed embodiments are illustrative and not restrictive.

**Claims**

1. A method (600) for migrating database content from a database (103) hosted on a first server (102) to a second server (122), the method comprising:

   performing a backup process, the backup process comprising receiving (602), from the first server, at least a portion of the database content of the database hosted on the first server; and storing (604) the received database content in a secondary storage system (112) as a backup version, wherein the secondary storage system stores different backup versions of the database content and tracks changes between the different backup versions of the database content; receiving (606) a request to migrate the database content of the database hosted on the first server to the second server; and, in response to receiving the request: performing (608) a migration process, the migration process comprising:

      providing to the second server, using the secondary storage system, one or more said backup versions of the database content stored at the secondary storage system; and for database content hosted on the first server that has not been provided to the second server as part of the one or more said backup versions, determining changes to the database content since the one or more said backup versions were stored; and using the determined changes in determining whether to send a command, the command causing write operations by the database hosted on the first server to be prevented.

2. The method of claim 1, wherein the backup process further comprises:
   configuring the secondary storage system to determine changes to the database content of the database hosted on the first server since a previous backup process.

3. The method of claim 2, wherein the received database content is stored in the secondary storage system using a tree data structure.

4. The method of any one of claims 1 to 3, in which the database content received from the first server is stored as chunks in the secondary storage system and the migration process further comprises:
   for each backup version that has not been provided to the second server as part of the one or more said backup versions, identifying one or more groups of chunks, each group comprising at least one chunk that has changed since the one or more said backup versions were stored; and providing to the second server the one or more identified groups of chunks.

5. The method of any one of claims 1 to 4, further comprising estimating (706) a first amount of time required to provide to the second server the determined changes to the database content.

6. The method of claim 4, further comprising estimating (706) a first amount of time required to provide to the second server the determined changes to the database content, and wherein estimating the amount of time required to perform the migration process comprises:
   evaluating an algorithm that is dependent upon one more of: number of backup versions that have been generated since a previous migration process, number of identified groups of chunks, number of bytes in the one or more identified groups of chunks and time to write the bytes to the second server.

7. The method of claim 5 or claim 6, further comprising: estimating a second amount of time, the second amount of time being the amount of time required to generate a candidate final backup version and perform the backup process for a portion of content hosted in the first server that has changed since the backup process was last performed, and wherein the first amount of time includes the second amount of time .

8. The method of any one of claims 5 to 7, wherein, in the event that the first estimated amount of time is not less than a downtime threshold, the migration process is performed (710) for backup versions that have been generated since a previous migration process, and a database hosted on the first server is accessible by one or more users associated with the database during the migration process.

9. The method of any one of claims 5 to 7, wherein in the event the first estimated amount of time is less than the downtime threshold, the migration process is performed (712) for backup versions that have been generated since a previous migration process and the database hosted on the first server is prevented from processing write operations.

10. The method of any one of claims 1 to 9, wherein the content of the database hosted on the first server comprises blocks and the backup process further comprises the secondary storage system receiving a list of blocks from the first server.

11. The method of claim 10, wherein the list comprises a list of all blocks in the database hosted on the first server, and the portion of content of the database hosted on the first server received in the backup process comprises all blocks in the database; or

   the list comprises a list of blocks that have changed since a previous backup process, and the portion of content of the database hosted on the first server received in the backup process comprises blocks that have changed since a previous backup process; or
   the list comprises a list of one or more groups of blocks, each group comprising at least one block that has changed since a previous backup process, and the portion of content of the database hosted on the first server received in the backup process comprises the one or more groups of blocks.

12. The method of claims 10 or 11, further comprising estimating an amount of time required to perform the backup process.

13. The method of claim 12, wherein estimating the amount of time required to perform the backup process comprises evaluating an algorithm that is dependent upon one or more of: number of bytes in the portion of content; distribution of the bytes stored on the first server; and number of threads of the first server available for the backup process.

14. A system (100) for data migration, the system comprising: one or more processors; and a memory configured to provide the one or more processors with instructions, the processors being operable, when configured with the instructions, to cause the system to perform the method according to any of claims 1 to 13.

15. A computer program product, the computer program product being embodied in a non- transitory computer readable storage medium and comprising computer instructions, which, when executed by a processing system, cause the processing system to perform the method according to any of claims 1 to 13.

**Patentansprüche**

1. Verfahren (600) zum Migrieren eines Datenbankinhalts aus einer Datenbank (103), die auf einem ersten Server (102) gehostet wird, an einen zweiten Server (122), das Verfahren umfassend:

   Durchführen eines Backup-Prozesses, der Backup-Prozess umfassend ein Empfangen (602) von mindestens einem Abschnitt des Datenbankinhalts der Datenbank, die auf dem ersten Server gehostet wird, von dem ersten Server; und
   Speichern (604) des empfangenen Datenbankinhalts in einem sekundären Speichersystem (112) als eine Backup-Version, wobei das sekundäre Speichersystem verschiedene Backup-Versionen des Datenbankinhalts speichert und Änderungen zwischen den verschiedenen Backup-Versionen des Datenbankinhalts verfolgt;
   Empfangen (606) einer Anforderung, den Datenbankinhalt der Datenbank, die auf dem ersten Server gehostet wird, an den zweiten Server zu migrieren; und
   als Reaktion auf das Empfangen der Anforderung:
   Durchführen (608) eines Migrationsprozesses, der Migrationsprozess umfassend:

      Bereitstellen dem zweiten Server, unter Verwendung des sekundären Speichersystems, einer oder mehrerer der Backup-Versionen des Datenbankinhalts, der an dem sekundären Speichersystem gespeichert wird; und
      für Datenbankinhalt, der auf dem ersten Server gehostet wird, der dem zweiten Server als Teil der einen oder der mehreren Backup-Versionen nicht bereitgestellt worden ist, Bestimmen von Änderungen an dem Datenbankinhalt, seitdem die eine oder die mehreren Backup-Versionen gespeichert wurden; und
      Verwenden der bestimmten Änderungen bei dem Bestimmen, ob ein Befehl gesendet werden soll, wobei der Befehl die Schreibvorgänge durch die Datenbank, die auf dem ersten Server gehostet wird, veranlasst, verhindert zu werden.

2. Verfahren nach Anspruch 1, wobei der Backup-Prozess ferner umfasst:
   Konfigurieren des sekundären Speichersystems, um Änderungen an dem Datenbankinhalt der Datenbank, die auf dem ersten Server gehostet wird, seit einem vorherigen Backup-Prozess zu bestimmen.

3. Verfahren nach Anspruch 2, wobei der empfangene Datenbankinhalt unter Verwendung einer Baumdatenstruktur in dem sekundären Speichersystem gespeichert wird.

4. Verfahren nach einem der Ansprüche 1 bis 3, in dem der Datenbankinhalt, der von dem ersten Server empfangen wird, als Chunks in dem sekundären Speichersystem gespeichert ist und der Migrationsprozess ferner umfasst:
für jede Backup-Version, die dem zweiten Server als Teil der einen oder der mehreren Backup-Versionen nicht bereitgestellt worden ist, Identifizieren einer oder mehrerer Gruppen von Chunks, jede Gruppe umfassend mindestens einen Chunk, der sich geändert hat, seitdem die eine oder die mehreren Backup-Versionen gespeichert wurden; und Bereitstellen dem zweiten Server der einen oder der mehreren identifizierten Gruppen von Chunks.

5. Verfahren nach einem der Ansprüche 1 bis 4, ferner umfassend ein Schätzen (706) einer ersten Zeitdauer, die erforderlich ist, um dem zweiten Server die bestimmten Änderungen des Datenbankinhalts bereitzustellen.

6. Verfahren nach Anspruch 4, ferner umfassend das Schätzen (706) einer ersten Zeitdauer, die erforderlich ist, um dem zweiten Server die bestimmten Änderungen an dem Datenbankinhalt bereitzustellen, und wobei das Schätzen der Zeitdauer, die erforderlich ist, um den Migrationsprozess durchzuführen, umfasst:
Auswerten eines Algorithmus, der abhängig ist von einem oder mehreren von: Anzahl von Backup-Versionen, die seit einem vorherigen Migrationsprozess erzeugt worden sind, Anzahl der identifizierten Gruppen von Chunks, Anzahl der Bytes in der einen oder den mehreren identifizierten Gruppen von Chunks und eine Zeit, um die Bytes auf den zweiten Server zu schreiben.

7. Verfahren nach Anspruch 5 oder 6, ferner umfassend:
Schätzen einer zweiten Zeitdauer, wobei die zweite Zeitdauer die Zeitdauer ist, die erforderlich ist, um eine endgültige Kandidaten-Backup-Version zu erzeugen, und den Backup-Prozess für einen Abschnitt des Inhalts durchzuführen, der in dem ersten Server gehostet wird, der sich geändert hat, seitdem der Backup-Prozess das letzte Mal durchgeführt wurde, und wobei die erste Zeitdauer die zweite Zeitdauer einschließt.

8. Verfahren nach einem der Ansprüche 5 bis 7, wobei in dem Fall, dass die erste geschätzte Zeitdauer nicht kleiner als eine Ausfallschwelle ist, der Migrationsprozess für Backup-Versionen durchgeführt (710) wird, die seit einem vorherigen Migrationsprozess erzeugt worden sind, und eine Datenbank, die auf dem ersten Server gehostet wird, durch einen oder mehrere Benutzer zugänglich ist, die der Datenbank während des Migrationsprozesses zugeordnet sind.

9. Verfahren nach einem der Ansprüche 5 bis 7, wobei in dem Fall, dass die erste geschätzte Zeitdauer kleiner als die Ausfallschwelle ist, der Migrationsprozess für Backup-Versionen durchgeführt (712) wird, die seit einem vorherigen Migrationsprozess erzeugt worden sind, und die Datenbank, die auf dem ersten Server gehostet wird, an dem Durchführen von Schreibvorgängen gehindert wird.

10. Verfahren nach einem der Ansprüche 1 bis 9, wobei der Inhalt der Datenbank, der auf dem ersten Server gehostet wird, Blöcke umfasst und der Backup-Prozess ferner umfasst, dass das sekundäre Speichersystem eine Liste von Blöcken von dem ersten Server empfängt.

11. Verfahren nach Anspruch 10, wobei die Liste eine Liste aller Blöcke in der Datenbank umfasst, die auf dem ersten Server gehostet wird, und der Abschnitt des Inhalts der Datenbank, die auf dem ersten Server gehostet wird, der in dem Backup-Prozess empfangen wird, alle Blöcke in der Datenbank umfasst; oder

    die Liste eine Liste von Blöcken umfasst, die sich seit einem vorherigen Backup-Prozess geändert haben, und der Abschnitt des Inhalts der Datenbank, der auf dem ersten Server gehostet wird, der in dem Backup-Prozess empfangen wird, Blöcke umfasst, die sich seit einem vorherigen Backup-Prozess geändert haben; oder
die Liste eine Liste einer oder mehrerer Gruppen von Blöcken umfasst, jede Gruppe umfassend mindestens einen Block, der sich seit einem vorherigen Backup-Prozess geändert hat, und der Abschnitt des Inhalts der Datenbank, der auf dem ersten Server gehostet wird, der in dem Backup-Prozess empfangen wird, die eine oder die mehreren Gruppen von Blöcken umfasst.

12. Verfahren nach Anspruch 10 oder 11, ferner umfassend das Schätzen einer Zeitdauer, die erforderlich ist, um den Backup-Prozess durchzuführen.

13. Verfahren nach Anspruch 12, wobei das Schätzen der Zeitdauer, die erforderlich ist, um den Backup-Prozess durchzuführen, das Auswerten eines Algorithmus umfasst, der abhängig ist von einem oder mehreren von: Anzahl von Bytes in dem Abschnitt von Inhalt; Verteilung der Bytes, die auf dem ersten Server gespeichert sind; und Anzahl von Threads des ersten Servers, die für den Backup-Prozess verfügbar sind.

14. System (100) für eine Datenmigration, das System umfassend: einen oder mehrere Prozessoren; und einen Speicher, der konfiguriert ist, um dem einen oder den mehreren Prozessoren Anweisungen bereitzustellen, wobei die Prozessoren betriebsfähig sind, wenn sie mit den Anweisungen konfiguriert sind, um das System zu veranlassen, das Verfahren nach einem der Ansprüche 1 bis 13 durchzuführen.

15. Computerprogrammprodukt, wobei das Computerprogrammprodukt in einem nichtflüchtigen computerlesbaren Speichermedium verkörpert ist und umfassend Computeranweisungen, die, wenn sie durch ein Verarbeitungssystem ausgeführt werden, das Verarbeitungssystem veranlassen, das Verfahren nach einem der Ansprüche 1 bis 13 durchzuführen.

**Revendications**

1. Procédé (600) de migration d'un contenu de base de données à partir d'une base de données (103) hébergée sur un premier serveur (102) vers un second serveur (122), le procédé comprenant :

la réalisation d'un processus de sauvegarde, le processus de sauvegarde comprenant la réception (602), à partir du premier serveur, d'au moins une partie du contenu de base de données de la base de données hébergée sur le premier serveur ; et
le stockage (604) du contenu de base de données reçu dans un système de stockage secondaire (112) en tant que version de sauvegarde, dans lequel le système de stockage secondaire stocke différentes versions de sauvegarde du contenu de base de données et suit les changements entre les différentes versions de sauvegarde du contenu de base de données ;
la réception (606) d'une demande de migration du contenu de base de données de la base de données hébergée sur le premier serveur vers le second serveur ; et,
en réponse à la réception de la demande :
la réalisation (608) d'un processus de migration, le processus de migration comprenant :

la fourniture au second serveur, à l'aide du système de stockage secondaire, d'une ou plusieurs desdites versions de sauvegarde du contenu de base de données stockée au niveau du système de stockage secondaire ; et
pour le contenu de base de données hébergée sur le premier serveur qui n'a pas été fourni au second serveur en tant que partie de ladite ou desdites versions de sauvegarde, la détermination de changements du contenu de base de données depuis que ladite ou lesdites versions de sauvegarde ont été stockées ; et
l'utilisation des changements déterminés dans la détermination du fait de savoir s'il faut envoyer une commande, la commande amenant les opérations d'écriture par la base de données hébergée sur le premier serveur à être empêchée.

2. Procédé selon la revendication 1, dans lequel le processus de sauvegarde comprend en outre :
la configuration du système de stockage secondaire pour déterminer des changements du contenu de base de données de la base de données hébergée sur le premier serveur depuis un processus de sauvegarde précédent.

3. Procédé selon la revendication 2, dans lequel le contenu de base de données reçu est stocké dans le système de stockage secondaire à l'aide d'une structure de données arborescente.

4. Procédé selon l'une quelconque des revendications 1 à 3, dans lequel le contenu de base de données reçu à partir du premier serveur est stocké en tant que morceaux dans le système de stockage secondaire et le processus de migration comprend en outre :
pour chaque version de sauvegarde qui n'a pas été fournie au second serveur en tant que partie de ladite ou desdites versions de sauvegarde, l'identification d'un ou plusieurs groupes de morceaux, chaque groupe comprenant au moins un morceau qui a changé depuis que ladite ou lesdites versions de sauvegarde ont été stockées ; et la fourniture au second serveur du ou des groupes de morceaux identifiés.

5. Procédé selon l'une quelconque des revendications 1 à 4, comprenant en outre l'estimation (706) d'une première quantité de temps requise pour fournir au second serveur les changements déterminés du contenu de base de données.

6. Procédé selon la revendication 4, comprenant en outre l'estimation (706) d'une première quantité de temps requise pour fournir au second serveur les changements déterminés au contenu de base de données, et dans lequel l'estimation de la quantité de temps requise pour réaliser le processus de migration comprend :
l'évaluation d'un algorithme qui dépend d'un ou plusieurs parmi : un nombre de versions de sauvegarde qui ont été générées depuis un processus de migration précédent, un nombre de groupes identifiés de morceaux, un nombre d'octets dans le ou les groupes de morceaux identifiés et le temps pour écrire les octets au second serveur.

7. Procédé selon la revendication 5 ou la revendication 6, comprenant en outre :
l'estimation d'une seconde quantité de temps, la seconde quantité de temps étant la quantité de temps requise pour générer une version de sauvegarde finale candidate et réaliser le processus de sauvegarde pour une partie de contenu hébergé dans le premier serveur qui a changé depuis la réalisation du dernier processus de sauvegarde, et dans lequel la première quantité de temps comporte la seconde quantité de temps.

8. Procédé selon l'une quelconque des revendications 5 à 7, dans lequel, dans le cas où la première quantité de temps estimée n'est pas inférieure à un seuil de temps d'arrêt, le processus de migration est réalisé (710) pour des versions de sauvegarde qui ont été générées depuis un processus de migration précédent, et une base de données hébergée sur le premier serveur est accessible par un ou plusieurs utilisateurs associés à la base de données pendant le processus de migration.

9. Procédé selon l'une quelconque des revendications 5 à 7, dans lequel, dans le cas où la première quantité de temps estimée est inférieure au seuil de temps d'arrêt, le processus de migration est réalisé (712) pour des versions de sauvegarde qui ont été générées depuis un processus de migration précédent et la base de données hébergée sur le premier serveur est empêchée de traiter des opérations d'écriture.

10. Procédé selon l'une quelconque des revendications 1 à 9, dans lequel le contenu de la base de données hébergée sur le premier serveur comprend des blocs et le processus de sauvegarde comprend en outre le système de stockage secondaire recevant une liste de blocs à partir du premier serveur.

11. Procédé selon la revendication 10, dans lequel la liste comprend une liste de tous les blocs dans la base de données hébergée sur le premier serveur, et la partie du contenu de la base de données hébergée sur le premier serveur reçu dans le processus de sauvegarde comprend tous les blocs dans la base de données ; ou

la liste comprend une liste de blocs qui ont changé depuis un processus de sauvegarde précédent, et la partie du contenu de la base de données hébergée sur le premier serveur reçu dans le processus de sauvegarde comprend des blocs qui ont changé depuis un processus de sauvegarde précédent ; ou
la liste comprend une liste d'un ou plusieurs groupes de blocs, chaque groupe comprenant au moins un bloc qui a changé depuis un processus de sauvegarde précédent, et la partie du contenu de la base de données hébergée sur le premier serveur reçu dans le processus de sauvegarde comprend le ou les groupes de blocs.

12. Procédé selon les revendications 10 ou 11, comprenant en outre l'estimation d'une quantité de temps requise pour réaliser le processus de sauvegarde.

13. Procédé selon la revendication 12, dans lequel l'estimation de la quantité de temps requise pour réaliser le processus de sauvegarde comprend l'évaluation d'un algorithme qui dépend d'un ou plusieurs parmi : un nombre d'octets dans la partie de contenu ; la distribution des octets stockés sur le premier serveur ; et le nombre de fils du premier serveur disponibles pour le processus de sauvegarde.

14. Système (100) de migration de données, le système comprenant : un ou plusieurs processeurs ; et une mémoire configurée pour fournir à l'un ou plusieurs processeurs des instructions, les processeurs pouvant fonctionner, lorsqu'ils sont configurés avec les instructions, pour amener le système à réaliser le procédé selon l'une quelconque des revendications 1 à 13.

15. Produit programme informatique, le produit programme informatique étant incorporé dans un support de stockage non transitoire lisible par ordinateur et comprenant des instructions informatiques, qui, lorsqu'elles sont exécutées par un système de traitement, amènent le système de traitement à réaliser le procédé selon l'une quelconque des revendications 1 à 13.

100

**Primary System** 102

103 Database

105 Change Block Tracker

106 Backup Agent

Storage Volume 104

**Server** 122

123 Database

126 Agent

Storage Volume 124

133 Application

130

140

110

112

**Secondary Storage System**

114 Metadata Store

117 File System Manager

111 N₁

113 N₂

115 Nₙ

**FIG. 1A**

26

FIG. 1B

**FIG. 1C**

FIG. 1D

FIG. 1E

FIG. 2A

FIG. 2B

FIG. 2C

FIG. 2D

**FIG. 3A**

EP 3 895 033 B1

FIG. 3B

FIG. 3C

FIG. 3D

402

404

412

413 414 415 416 417

400

FIG. 4A

FIG. 4B

EP 3 895 033 B1

500

Traverse Tree Associated With A Backup Snapshot — 502

Determine Leaf Nodes Not Shared With One Or More Previous Trees — 504

Provide Data Associated With Determined Leaf Nodes — 506

FIG. 5

600 →

Receiving, from a first server, at least a portion of content of a database hosted on the first server — 602

Storing the received database content in a secondary storage system that tracks changes between different backup versions of the database content — 604

Receiving a request to migrate content of the database hosted on the first server to a second server — 606

Performing a migration process comprising providing to the second server, using the secondary storage system, one or more said backup versions of the database content — 608

**FIG. 6A**

612

Receiving database content in the secondary storage system

614

For each backup version that has not been provided to the second server, identifying one or more groups of chunks, each group comprising at least one chunk that has changed since a previous migration process

616

Providing to the second server the one or more identified groups of chunks

**FIG. 6B**

FIG. 7

700

Receive indication that
migration instance is complete
702

Determining changes to the
content of the database
hosted on the first server that
have not been migrated
704

Estimating the amount of time
required to perform the
migration process
706

708 < Downtime Threshold?

712 — Yes — The migration process is performed for backup versions that have been generated since a previous migration process and the database hosted on the first server is transitioned into read-only state

710 — No — The migration process is performed for backup versions that have been generated since a previous migration process, and a database hosted on the first server is accessible by one or more users associated with the database during the migration process

**EP 3 895 033 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018225177 A1